# EUROPEAN PATENT APPLICATION

(11) **EP 4 572 460 A1**
(43) Date of publication of application: **18.06.2025**
(21) Application number: 23834832.0
(22) Date of filing: 04.07.2023
(51) Int. Cl.: H04W 72/04

(54) **METHOD AND APPARATUS USED IN WIRELESS COMMUNICATION NODE**

(30) Priority: 08.07.2022 CN 202210804437
(71) Applicant: SHANGHAI LANGBO COMMUNICATION TECHNOLOGY COMPANY LIMITED, Shanghai 200240 (CN)
(72) Inventor: WU, Keying, Shanghai 201206 (CN); ZHANG, Xiaobo, Shanghai 201206 (CN)
(74) Representative: Gunzelmann, Rainer
(86) International application number: PCT/CN2023/105675
(87) International publication number: WO 2024/008065

(57) **Abstract**

Disclosed in the present application are a method and an apparatus used in nodes for wireless communication. A first node receives a first channel state information (CSI) report configuration and updates a first CSI report. The first CSI report configuration is used to determine the first CSI report; the first CSI report configuration includes a first higher-layer parameter and a second higher-layer parameter; the first higher-layer parameter is set to a first parameter value, which belongs to a first candidate parameter value subset; the second higher-layer parameter is used to determine a first reference signal (RS) resource group, which is used for channel measurement; the first CSI report does not occupy type-I processing units prior to a first symbol; and a quantity of the type-I processing units occupied by the first CSI report is related to whether the first CSI report configuration is used to generate a first function. The above method meets the requirements for CSI processing capabilities while avoiding the waste of the processing capabilities and optimizing system design.

## Description

### FIELD OF TECHNOLOGY

The present application relates to transmission methods and apparatuses in wireless communication systems, and in particular, to a solution and an apparatus related to channel state information (CSI) in a wireless communication system.

### BACKGROUND

In conventional wireless communication, a report from user equipment (UE) may include at least one of various types of auxiliary information, such as CSI, auxiliary information related to beam management, and auxiliary information related to positioning. The CSI includes at least one of a CSI-RS resource indicator (CRI), a rank indicator (RI), a precoding matrix indicator (PMI), or a channel quality indicator (CQI).

A network device selects appropriate transmission parameters for the UE based on the report from the UE, such as a camped cell, a modulation and coding scheme (MCS), a transmitted precoding matrix indicator (TPMI), and a transmission configuration indication (TCI). In addition, the report from the UE may be used to optimize network parameters, such as achieving better cell coverage and switching a base station on or off according to the location of the UE.

In a new radio (NR) system, a priority of a CSI report is defined. The priority is used to determine whether to allocate a CSI processing unit (CPU) resource to the corresponding CSI report for update, or whether to abandon the update of the corresponding CSI report.

### SUMMARY

A conventional PMI feedback method will bring about a large amount of overhead. In NR release 18, an artificial intelligence (Al)/machine learning (ML)-based CSI report has been initiated as a project. Through research, the applicant has found that there are significant differences between ML/Al-based CSI calculations and conventional CSI calculations, requiring distinct processing capabilities and exhibiting divergent demands for the occupation of processing units. Therefore, when ML/AI-based CSI report technology is introduced, how the UE determines a quantity of processing units that need to be occupied by the ML/AI-based CSI report is a problem that needs to be solved.

In response to the above problem, the present application discloses a solution. It should be noted that although a large number of embodiments of the present application are developed for AI/ML, the present application is also applicable to other solutions, such as conventional codebook-based solutions. In addition, adopting a unified solution for different scenarios (including, but not limited to, an AI/ML-based solution and a codebook-based solution) also contributes to reducing hardware complexity and cost. Without conflict, the embodiments in the first node of the present application and the features in the embodiments may be applied to the second node, and vice versa. Without conflict, the embodiments of the present application and the features in the embodiments may be combined with each other arbitrarily.

As an embodiment, the interpretation of terminology in the present application refers to the definitions in the 3rd Generation Partnership Project (3GPP) Technical Specification (TS) 36 series.

As an embodiment, the interpretation of terminology in the present application refers to the definitions in the 3GPP TS 38 series.

As an embodiment, the interpretation of the terminology in the present application refers to the definitions in the 3GPP TS 37 series.

As an embodiment, the interpretation of terminology in the present application refers to the definitions in the Institute of Electrical and Electronics Engineers (IEEE) standard.

The present application discloses a method used in a first node for wireless communication, including:
receiving a first CSI report configuration, the first CSI report configuration being used to determine a first CSI report; and
updating the first CSI report,
where the first CSI report configuration includes a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; the first CSI report does not occupy type-I processing units prior to a first symbol; and a quantity of the type-I processing units occupied by the first CSI report is related to whether the first CSI report configuration is used to generate a first function.

As an embodiment, the problems to be solved by the present application include: how to reasonably allocate processing units for CSI reports. In the above method, the quantity of the type-I processing units occupied by the first CSI report is related to whether the first CSI report configuration is used to generate the first function, which solves this problem.

As an embodiment, the advantages of the above method include: processing units are flexibly and reasonably allocated according to the requirements of the first CSI report, so that the waste of processing capabilities is avoided while the processing capability requirements of CSI reports are met.

According to an aspect of the present application, the first CSI report configuration includes a third higher-layer parameter, the third higher-layer parameter being used to determine whether the first CSI report configuration is used to generate the first function.

According to an aspect of the present application, whether the first CSI report configuration includes a fourth higher-layer parameter is used to determine whether the first CSI report configuration is used to generate the first function.

According to an aspect of the present application, when the first CSI report configuration is used to generate the first function, the quantity of the type-I processing units occupied by the first CSI report is related to a first index, the first index being associated with the first function.

As an embodiment, the characteristics of the above method include: the quantity of the type-I processing units occupied by the first CSI report is related to the first function, such as, but not limited to, the characteristics of a wireless channel to which the first function is applicable.

As an embodiment, the advantages of the above method include: processing units are reasonably allocated according to the requirements of the first function, so that the waste of processing capabilities is avoided while the processing capability requirements of CSI reports are met.

According to an aspect of the present application, the method includes:
receiving a first CSI report configuration set; and
transmitting a second CSI report, the second CSI report including first compressed CSI,
where the first CSI report configuration set includes a second CSI report configuration, the second CSI report configuration being used to determine the second CSI report; and first pre-compression CSI is used as an input of the first function to generate the first compressed CSI.

According to an aspect of the present application, when the first CSI report configuration is not used to generate the first function, the type-I processing units are type-II processing units; and when the first CSI report configuration is used to generate the first function, the type-I processing units are type-III processing units.

As an embodiment, the characteristics of the above method include: different processing units are provided for CSI reports with different processing capability requirements respectively, which optimizes system design and avoids the waste of processing capabilities.

According to an aspect of the present application, when the first CSI report configuration is used to generate the first function, the first CSI report occupies type-IV processing units starting from a second symbol.

As an embodiment, the characteristics of the above method include: two types of processing units are configured to provide different processing capabilities respectively, which optimizes system design and avoids the waste of processing capabilities.

According to an aspect of the present application, the first node is user equipment.

According to an aspect of the present application, the first node is a relay node.

The present application discloses a method used in a second node for wireless communication, including:
transmitting a first CSI report configuration, the first CSI report configuration being used to determine a first CSI report,
where the first CSI report configuration includes a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; a target recipient of the first CSI report configuration updates the first CSI report; the first CSI report does not occupy type-I processing units prior to a first symbol; and a quantity of the type-I processing units occupied by the first CSI report is related to whether the first CSI report configuration is used to generate a first function.

According to an aspect of the present application, the first CSI report configuration includes a third higher-layer parameter, the third higher-layer parameter being used to determine whether the first CSI report configuration is used to generate the first function.

According to an aspect of the present application, whether the first CSI report configuration includes a fourth higher-layer parameter is used to determine whether the first CSI report configuration is used to generate the first function.

According to an aspect of the present application, when the first CSI report configuration is used to generate the first function, the quantity of the type-I processing units occupied by the first CSI report is related to a first index, the first index being associated with the first function.

According to an aspect of the present application, the method includes:
transmitting a first CSI report configuration set; and
receiving a second CSI report, the second CSI report including first compressed CSI,
where the first CSI report configuration set includes a second CSI report configuration, the second CSI report configuration being used to determine the second CSI report; and first pre-compression CSI is used as an input of the first function to generate the first compressed CSI.

According to an aspect of the present application, when the first CSI report configuration is not used to generate the first function, the type-I processing units are type-II processing units; and when the first CSI report configuration is used to generate the first function, the type-I processing units are type-III processing units.

According to an aspect of the present application, when the first CSI report configuration is used to generate the first function, the first CSI report occupies type-IV processing units starting from a second symbol.

According to an aspect of the present application, the second node is a base station.

According to an aspect of the present application, the second node is user equipment.

According to an aspect of the present application, the second node is a relay node.

The present application discloses a first node device used for wireless communication, including:
a first receiver, configured to receive a first CSI report configuration, the first CSI report configuration being used to determine a first CSI report; and
a first processor, configured to update the first CSI report,
where the first CSI report configuration includes a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; the first CSI report does not occupy type-I processing units prior to a first symbol; and a quantity of the type-I processing units occupied by the first CSI report is related to whether the first CSI report configuration is used to generate a first function.

The present application discloses a second node device used for wireless communication, including:
a first transmitter, configured to transmit a first CSI report configuration, the first CSI report configuration being used to determine a first CSI report,
where the first CSI report configuration includes a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; a target recipient of the first CSI report configuration updates the first CSI report; the first CSI report does not occupy type-I processing units prior to a first symbol; and a quantity of the type-I processing units occupied by the first CSI report is related to whether the first CSI report configuration is used to generate a first function.

As an embodiment, compared with a conventional solution, the present application has the following advantages:
Processing units are flexibly and reasonably allocated according to the requirements, so that the waste of processing capabilities is avoided while the processing capability requirements of CSI reports are met.

Processing units are reasonably allocated according to different processing capability requirements of CSI report generators applicable to different wireless channels.

Different processing units are configured to meet different processing capability requirements respectively, which optimizes system design.

### BRIEF DESCRIPTION OF THE DRAWINGS

Other features, objectives and advantages of the present application will become more apparent by reading the detailed description of non-limiting embodiments with reference to the following drawings:
FIG. 1 shows a flowchart of a first CSI report configuration and a first CSI report according to an embodiment of the present application;
FIG. 2 shows a schematic diagram of a network architecture according to an embodiment of the present application;
FIG. 3 shows a schematic diagram of an embodiment of radio protocol architectures of a user plane and a control plane according to an embodiment of the present application;
FIG. 4 shows a schematic diagram of a first communication device and a second communication device according to an embodiment of the present application;
FIG. 5 shows a flowchart of transmission according to an embodiment of the present application;
FIG. 6 shows a schematic diagram of an artificial intelligence or machine learning-based processing system according to an embodiment of the present application;
FIG. 7 shows a schematic diagram in which a first CSI report configuration is used to generate a first function according to an embodiment of the present application;
FIG. 8 shows a schematic diagram in which a first CSI report configuration is not used to generate a first function according to an embodiment of the present application;
FIG. 9 shows a schematic diagram in which a quantity of type-I processing units occupied by a first CSI report is related to whether a first CSI report configuration is used to generate a first function according to an embodiment of the present application;
FIG. 10 shows a schematic diagram in which a third higher-layer parameter is used to determine whether a first CSI report configuration is used to generate a first function according to an embodiment of the present application;
FIG. 11 shows a schematic diagram in which whether a first CSI report configuration includes a fourth higher-layer parameter is used to determine whether the first CSI report configuration is used to generate a first function according to an embodiment of the present application;
FIG. 12 shows a schematic diagram in which when a first CSI report configuration is used to generate a first function, a quantity of type-I processing units occupied by a first CSI report is related to a first index according to an embodiment of the present application;
FIG. 13 shows a schematic diagram of a first function, first compressed CSI, and first pre-compression CSI according to an embodiment of the present application;
FIG. 14 shows a schematic diagram of a second function according to an embodiment of the present application;
FIG. 15 shows a schematic diagram of a relationship among first pre-compression CSI, first compressed CSI, a first function, and a second function according to an embodiment of the present application;
FIG. 16 shows a schematic diagram in which when a first CSI report configuration is not used to generate a first function, type-I processing units are type-II processing units; and when the first CSI report configuration is used to generate the first function, the type-I processing units are type-III processing units according to an embodiment of the present application;
FIG. 17 shows a schematic diagram in which when a first CSI report configuration is used to generate a first function, a first CSI report occupies type-IV processing units starting from a second symbol according to an embodiment of the present application;
FIG. 18 shows a structural block diagram of a processing apparatus used in a first node device according to an embodiment of the present application; and
FIG. 19 shows a structural block diagram of a processing apparatus used in a second node device according to an embodiment of the present application.

### DESCRIPTION OF THE EMBODIMENTS

The following will describe the technical solution of the present application in further detail with reference to the accompanying drawings. It should be noted that, in the absence of a conflict, the embodiments in the present application and the features in the embodiments may be arbitrarily combined with each other.

### Embodiment 1

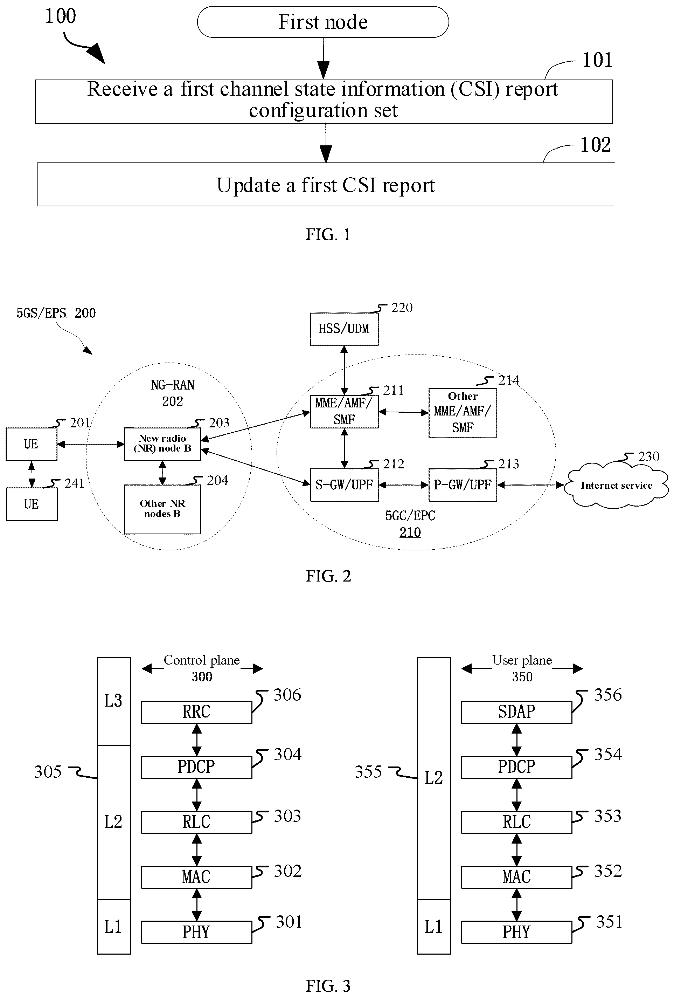

Embodiment 1 illustrates a flowchart of a first CSI report configuration and a first CSI report according to an embodiment of the present application, as shown in FIG. 1. In 100 shown in FIG. 1, each block represents a step. In particular, the order of the steps in the blocks does not represent a specific temporal order among the steps.

In Embodiment 1, the first node in the present application receives a first CSI report configuration in step 101, which is used to determine a first CSI report, and updates the first CSI report in step 102, where the first CSI report configuration includes a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; the first CSI report does not occupy type-I processing units prior to a first symbol; and a quantity of the type-I processing units occupied by the first CSI report is related to whether the first CSI report configuration is used to generate a first function.

As an embodiment, the CSI refers to: Channel State Information.

As an embodiment, the CSI includes channel information.

As an embodiment, the CSI includes a channel matrix.

As an embodiment, the CSI includes information of a channel matrix.

As an embodiment, the CSI includes amplitude and phase information of elements in a channel matrix.

As an embodiment, the CSI includes an eigenvector.

As an embodiment, the CSI includes information of an eigenvector.

As an embodiment, the CSI includes amplitude and phase information of elements in an eigenvector.

As an embodiment, the eigenvector includes an eigenvector of a channel matrix.

As an embodiment, the eigenvector includes an eigenvector of a channel covariance matrix.

As an embodiment, the matrix includes a vector.

As an embodiment, the first CSI report configuration is carried by higher-layer signaling.

As an embodiment, the first CSI report configuration is carried by radio resource control (RRC) signaling.

As an embodiment, the first CSI report configuration is carried by an information element (IE).

As an embodiment, the first CSI report configuration is an IE.

As an embodiment, the first CSI report configuration is an IE, and a name of the first CSI report configuration includes "CSI-ReportConfig".

As an embodiment, the first CSI report configuration includes information in some or all of fields in a CSI-ReportConfig IE.

As an embodiment, the first CSI report configuration is a CSI-ReportConfig IE.

As an embodiment, the first CSI report configuration is periodic.

As an embodiment, the first CSI report configuration is semi-persistent.

As an embodiment, the first CSI report configuration is aperiodic.

As an embodiment, the first CSI report configuration is identified by a CSI-ReportConfigId.

As an embodiment, the first CSI report is a CSI report for the first CSI report configuration.

As an embodiment, the first CSI report is generated according to the first CSI report configuration.

As an embodiment, the first higher-layer parameter includes information in at least one field of the first CSI report configuration.

As an embodiment, the first higher-layer parameter is used to determine a CSI report quantity of the first CSI report configuration.

As an embodiment, the first higher-layer parameter indicates a CSI report quantity of the first CSI report configuration.

As an embodiment, the first higher-layer parameter indicates whether the first node reports a CSI report quantity for the first CSI report configuration; and if the first higher-layer parameter indicates that the first node reports the CSI report quantity for the first CSI report configuration, the first higher-layer parameter indicates which CSI report quantities the first node reports for the first CSI report configuration.

As an embodiment, a name of the first higher-layer parameter includes "reportQuantity".

As an embodiment, the first higher-layer parameter is a higher-layer parameter "reportQuantity".

As an embodiment, the first parameter value is equal to "none".

As an embodiment, the first candidate parameter value subset includes at least one candidate parameter value.

As an embodiment, a candidate parameter value included in the first candidate parameter value subset is "none".

As an embodiment, the first candidate parameter value subset includes only one candidate parameter value.

As an embodiment, the first candidate parameter value subset includes only one candidate parameter value, and the one candidate parameter value included in the first candidate parameter value subset is "none".

As an embodiment, the first parameter value is equal to "none", and the first candidate parameter value subset consists of a parameter value "none".

As an embodiment, the first candidate parameter value subset includes a plurality of candidate parameter values.

As an embodiment, the first candidate parameter value subset includes a plurality of candidate parameter values, and one candidate parameter value in the plurality of candidate parameter values is "none".

As a sub-embodiment of the above embodiment, the first candidate parameter value subset includes at least one candidate parameter value different from "none".

As an embodiment, candidate values of the first higher-layer parameter include the first candidate parameter value subset.

As an embodiment, candidate values of the first higher-layer parameter include at least one parameter value that does not belong to the first candidate parameter value subset.

As an embodiment, the first candidate parameter value subset does not need to be configured.

As an embodiment, the first candidate parameter value subset does not require configuration by higher-layer signaling or physical-layer signaling.

As an embodiment, the first candidate parameter value subset is default.

As an embodiment, the first candidate parameter value subset is predefined.

As an embodiment, the first candidate parameter value subset is configurable.

As an embodiment, the first candidate parameter value subset is configured by higher-layer signaling.

As an embodiment, the first node does not report any CSI report quantity for the first CSI report configuration.

As an embodiment, when a value of the first higher-layer parameter is set to any candidate parameter value in the first candidate parameter value subset, the first node does not report any CSI report quantity for the first CSI report configuration.

As an embodiment, the first candidate parameter value subset includes a first candidate parameter value; and when the first parameter value is equal to the first candidate parameter value, the first node reports at least one CSI report quantity for the first CSI report configuration.

As an embodiment, the first CSI report does not include a report of any CSI report quantity.

As an embodiment, the CSI report quantity includes compressed CSI, a channel quality indicator (CQI), a precoding matrix indicator (PMI), a CSI-RS resource indicator (CRI), a layer indicator (LI), a rank indicator (RI), an SS/PBCH block resource indicator (SSBRI), layer 1 reference signal received power (L1-RSRP), and a layer 1 signal-to-interference and noise ratio (L1-SINR).

As an embodiment, the CSI report quantity further includes at least one of a capability index or a capability set index.

As an embodiment, the compressed CSI includes at least one of a compressed channel matrix or a compressed eigenvector.

As an embodiment, the compressed CSI includes one or more of a compressed PMI, a compressed channel matrix, or a compressed eigenvector.

As an embodiment, the compressed CSI includes one or more of a compressed PMI, a compressed channel matrix, a compressed eigenvector, compressed channel matrix information, a compressed channel covariance matrix, or compressed channel covariance matrix information.

As an embodiment, the first node does not report any type-I CSI report quantity for the first CSI report configuration.

As an embodiment, when a value of the first higher-layer parameter is set to any candidate parameter value in the first candidate parameter value subset, the first node does not report any type-I CSI report quantity for the first CSI report configuration.

As an embodiment, the first candidate parameter value subset includes a first candidate parameter value; and when the first parameter value is equal to the first candidate parameter value, the first node reports at least one type-I CSI report quantity for the first CSI report configuration.

As an embodiment, the first CSI report does not include a report of any type-I CSI report quantity.

As an embodiment, the type-I CSI report quantity includes compressed CSI, a CQI, a PMI, a CRI, an LI, an RI, an SSBRI, L1-RSRP, and an L1-SINR.

As an embodiment, the type-I CSI report quantity further includes at least one of a capability index or a capability set index.

As an embodiment, when the first parameter value is equal to any candidate parameter value in P1 candidate parameter values, the first node reports a type-II CSI report quantity for the first CSI report configuration, where P1 is a positive integer; and any candidate parameter value in the P1 candidate parameter values belongs to the first candidate parameter value subset, and at least one candidate parameter value in the first candidate parameter value subset does not belong to the P1 candidate parameter values.

As a sub-embodiment of the above embodiment, when a value of the first higher-layer parameter is set to any candidate parameter value in the first candidate parameter value subset that does not belong to the P1 candidate parameter values, the first node does not report the type-II CSI report quantity for the first CSI report configuration.

As a sub-embodiment of the above embodiment, when a value of the first higher-layer parameter is set to any candidate parameter value in P1 candidate parameter values, the first CSI report configuration is used to generate the first function.

As a sub-embodiment of the above embodiment, the first candidate parameter value subset includes the P1 candidate parameter values and a parameter value "none".

As a sub-embodiment of the above embodiment, P1 is equal to 1.

As a sub-embodiment of the above embodiment, P1 is greater than 1.

As an embodiment, when the first CSI report configuration is used to generate the first function, the first node reports a type-II CSI report quantity for the first CSI report configuration.

As an embodiment, when the first CSI report configuration is used to generate the first function, the first CSI report includes a report of a type-II CSI report quantity.

As an embodiment, the first node does not report any type-I CSI report quantity for the first CSI report configuration; and when the first CSI report configuration is used to generate the first function, the first node reports a type-II CSI report quantity for the first CSI report configuration.

As an embodiment, the type-II CSI report quantity is used to determine the first function.

As an embodiment, the type-II CSI report quantity includes a trained model, the trained model being used to construct the first function.

As an embodiment, the type-II CSI report quantity includes a trained model, which is used to construct the first function.

As an embodiment, the second higher-layer parameter includes information in at least one field of the first CSI report configuration.

As an embodiment, a name of the second higher-layer parameter includes "resourcesForChannelMeasurement".

As an embodiment, the second higher-layer parameter is a higher-layer parameter "resourcesForChannelMeasurement".

As an embodiment, the second higher-layer parameter indicates the first RS resource group.

As an embodiment, the second higher-layer parameter indicates that the first RS resource group is used for channel measurement.

As an embodiment, the first RS resource group is used by the first node for channel measurement.

As an embodiment, a measurement for the first RS resource group is used to update the first CSI report.

As an embodiment, the first node obtains a channel measurement for updating the first CSI report based on the first RS resource group.

As an embodiment, the first node obtains a channel measurement for updating the first CSI report only based on the first RS resource group.

As an embodiment, a measurement for one RS resource group includes: a measurement for an RS transmitted in each RS resource in the one RS resource group.

As an embodiment, a measurement for one RS resource group includes: a measurement for an RS transmitted in at least one RS resource in the one RS resource group.

As an embodiment, the first RS resource group includes at least one RS resource.

As an embodiment, the first RS resource group includes a channel state information-reference signal (CSI-RS) resource set.

As an embodiment, the first RS resource group is a CSI-RS resource set.

As an embodiment, the first RS resource group is a non-zero-power (NZP) CSI-RS resource set.

As an embodiment, the first RS resource group is identified by an NZP-CSI-RS-ResourceSetId.

As an embodiment, the first RS resource group is identified by a CSI-SSB-ResourceSetId.

As an embodiment, the first RS resource group includes only one RS resource.

As an embodiment, the first RS resource group includes a plurality of RS resources.

As an embodiment, RS resources in the first RS resource group include a CSI-RS resource.

As an embodiment, RS resources in the first RS resource group include a synchronisation signal (SS)/physical croadcast channel (PBCH) block resource.

As an embodiment, any RS resource in the first RS resource group is a CSI-RS resource.

As an embodiment, any RS resource in the first RS resource group is identified by an NZP-CSI-RS-ResourceId.

As an embodiment, any RS resource in the first RS resource group is an SS/PBCH block resource.

As an embodiment, any RS resource in the first RS resource group is identified by an SSB-Index.

As an embodiment, any RS resource in the first RS resource group is a CSI-RS resource or an SS/PBCH block resource.

As an embodiment, any RS resource in the first RS resource group includes at least one RS port.

As an embodiment, the RS port includes a CSI-RS port.

As an embodiment, the RS port includes an antenna port.

As an embodiment, the second higher-layer parameter indicates M RS resource groups, where M is a positive integer greater than 1, and the first RS resource group is one of the M RS resource groups; and the first information block indicates the first RS resource group in the M RS resource groups.

As a sub-embodiment of the above embodiment, the first information block is carried by an IE.

As a sub-embodiment of the above embodiment, a name of an IE carrying the first information block includes "CSI-AperiodicTriggerStateList".

As a sub-embodiment of the above embodiment, the first CSI report configuration and the first information block are carried by different IEs respectively.

As a sub-embodiment of the above embodiment, the first information block indicates a CSI triggering state corresponding to the first CSI report configuration.

As a sub-embodiment of the above embodiment, any RS resource group in the M RS resource groups includes at least one RS resource, and any RS resource in any RS resource group in the M RS resource groups is a CSI-RS resource or an SS/PBCH block resource.

As a sub-embodiment of the above embodiment, any RS resource group in the M RS resource groups is identified by an NZP-CSI-RS-ResourceSetId or a CSI-SSB-ResourceSetId.

As an embodiment, the first higher-layer parameter and the second higher-layer parameter are carried by different fields of the first CSI report configuration respectively.

As an embodiment, the meaning of the statement where the first CSI report configuration is used to determine a first CSI report includes: the first CSI report configuration is used to determine an RS resource group for obtaining channel measurement used to update the first CSI report.

As an embodiment, the meaning of the statement where the first CSI report configuration is used to determine a first CSI report includes: the first CSI report configuration is used to indicate that the first CSI report does not include a CSI report quantity.

As an embodiment, the meaning of the statement where the first CSI report configuration is used to determine a first CSI report includes: the first CSI report configuration is used to indicate that the first CSI report does not include a type-I CSI report quantity.

As an embodiment, the meaning of the statement where the first CSI report configuration is used to determine a first CSI report includes: the first CSI report configuration indicates values of some or all of higher-layer parameters "resourcesForChannelMeasurement", "csi-IM-ResourcesForInterference", "reportQuantity", "nzp-CSI-RS-ResourcesForInterference", "reportConfigType", "reportFreqConfiguration", "timeRestrictionForChannelMeasurements", "timeRestrictionForInterferenceMeasurements", "subbandSize" or "codebookConfig" corresponding to the first CSI report.

As an embodiment, when the first CSI report configuration is used to determine the first function, the first CSI report is non-codebook-based.

As an embodiment, when the first CSI report configuration is used to determine the first function, the first CSI report is generated based on artificial intelligence or machine learning.

As an embodiment, when the first CSI report configuration is used to determine the first function, the first CSI report is generated based on a neural network.

As an embodiment, when the first CSI report configuration is used to determine the first function, the first CSI report is generated based on conventional neural networks (CNN).

As an embodiment, the first symbol is an orthogonal frequency division multiplexing (OFDM) symbol.

As an embodiment, the first symbol is a single carrier-frequency division multiple access (SC-FDMA) symbol.

As an embodiment, the first CSI report occupies the type-I processing units starting from the first symbol.

As an embodiment, when the quantity of the type-I processing units occupied by the first CSI report is greater than 0, the first CSI report occupies the type-I processing units starting from the first symbol.

As an embodiment, the type-I processing unit includes a CSI processing unit.

As an embodiment, the type-I processing unit is a CSI processing unit.

As an embodiment, the type-I processing unit is a general-purpose processing unit.

As an embodiment, the quantity of the type-I processing units occupied by the first CSI report is a non-negative integer.

As an embodiment, the quantity of the type-I processing units occupied by the first CSI report is equal to 0.

As an embodiment, the quantity of the type-I processing units occupied by the first CSI report is greater than 0.

As an embodiment, an output of the first function includes compressed CSI.

As an embodiment, the first function is non-linear.

As an embodiment, the first function is non-codebook-based.

As an embodiment, an input of the first function includes CSI.

As an embodiment, an input of the first function includes a channel matrix.

As an embodiment, an input of the first function includes an eigenvector.

As an embodiment, an input of the first function includes an uncompressed channel matrix or eigenvector.

As an embodiment, a payload size of any input of the first function is greater than a payload size of an output of the first function corresponding to the any input.

As an embodiment, the first function is based on artificial intelligence or machine learning.

As an embodiment, the first function is based on a neural network.

As an embodiment, the first function includes a neural network for CSI compression.

As an embodiment, the first function includes an encoder of a neural network for CSI compression.

As an embodiment, the first function includes a CNN-based encoder for CSI compression.

As an embodiment, the first function is obtained through training.

As an embodiment, the first function includes K1 sub-functions, where K1 is a positive integer greater than 1; and the K1 sub-functions include one or more of a convolution function, a pooling function, a concatenation function, or an activation function.

As an embodiment, there is a sub-function in the K1 sub-functions that includes a fully connected layer.

As an embodiment, there is a sub-function in the K1 sub-functions that includes a pooling layer.

As an embodiment, there is a sub-function in the K1 sub-functions that includes at least one convolutional layer.

As an embodiment, there is a sub-function in the K1 sub-functions that includes at least one encoding layer.

As an embodiment, there are two sub-functions in the K1 sub-functions that include a fully connected layer and at least one encoding layer respectively.

As an embodiment, an encoding layer includes at least one convolutional layer and a pooling layer.

As an embodiment, in a convolutional layer, at least one convolution kernel is used to convolve an input of the first function to generate a corresponding feature map, and at least one feature map output by the convolutional layer is reshaped into one vector and input to a fully connected layer; and the fully connected layer converts the one vector into an output of the first function.

As an embodiment, an encoder based on CsiNet or CRNet is used to implement the first function.

As an embodiment, for a detailed description of CsiNet, reference is made to Chao-Kai Wen, Deep Learning for Massive CSI Feedback, 2018 IEEE Wireless Communications Letters, vol. 7 No. 5, Oct. 2018, etc.

As an embodiment, for a detailed description of CRNet, reference is made to Zhilin Lu, Multi-resolution CSI Feedback with Deep Learning in Massive MIMO System, 2020 IEEE International Conference on Communications (ICC), etc.

As an embodiment, some or all of a convolution kernel size, the number of convolutional layers, a convolution stride, a pooling kernel size, a pooling kernel stride, a pooling function, an activation function, or the number of feature maps of the first function are obtained through training.

As an embodiment, some or all of a convolution kernel, a pooling kernel, a pooling function, an activation function, parameters of the pooling function, or parameters of the activation function of the first function are obtained through training.

As an embodiment, the first function is determined by the first node itself.

As an embodiment, the first CSI report configuration is used by the first node to generate the first function.

As an embodiment, the first CSI report configuration is not used by the first node to generate the first function.

As an embodiment, when the first CSI report configuration is used to generate the first function, the action of updating the first CSI report includes obtaining a channel measurement for generating data required to train the first function.

As an embodiment, when the first CSI report configuration is used to generate the first function, the action of updating the first CSI report includes obtaining a channel measurement for training the first function by measuring the first RS resource group.

As an embodiment, when the first CSI report configuration is used to generate the first function, the action of updating the first CSI report includes constructing the first function through model training.

As an embodiment, when the first CSI report configuration is not used to generate the first function, the action of updating the first CSI report includes at least one of calculating L1-RSRP or obtaining a channel measurement for calculating L1-RSRP.

As an embodiment, the first higher-layer parameter is used to determine whether the first CSI report configuration is used to generate the first function.

As an embodiment, when the first parameter value is equal to any candidate parameter value in P2 candidate parameter values, the first CSI report configuration is used to generate the first function, where P2 is a positive integer; and any candidate parameter value in the P2 candidate parameter values belongs to the first candidate parameter value subset, and at least one candidate parameter value in the first candidate parameter value subset does not belong to the P2 candidate parameter values.

As an embodiment, when a value of the first higher-layer parameter is set to any candidate parameter value in the first candidate parameter value subset that does not belong to the P2 candidate parameter values, the first CSI report configuration is not used to generate the first function.

As an embodiment, the first candidate parameter value subset includes the P2 candidate parameter values and a parameter value "none".

As an embodiment, the first candidate parameter value subset consists of the P2 candidate parameter values and a parameter value "none".

As an embodiment, P2 is equal to 1.

As an embodiment, P2 is greater than 1.

### Embodiment 2

Embodiment 2 illustrates a schematic diagram of a network architecture according to an embodiment of the present application, as shown in FIG. 2.

FIG. 2 illustrates a network architecture 200 of long-term evolution (LTE), long-term evolution advanced (LTE-A), and future 5G systems. The network architecture 200 of the LTE, LTE-A, and future 5G systems is referred to as an evolved packet system (EPS) 200. A 5G NR or LTE network architecture 200 may be referred to as a 5G system (5GS)/evolved packet system (EPS) 200 or any other appropriate terminology. A 5GS/EPS 200 may include one or more pieces of user equipment (UE) 201, a piece of UE 241 that conducts sidelink communication with the UE 201, a next generation radio access network (NG-RAN) 202, a 5G core network (5GC)/evolved packet core (EPC) 210, a home subscriber server (HSS)/unified data management (UDM) 220, and an Internet service 230. The 5GS/EPS 200 may be interconnected with other access networks, but these entities/interfaces are not shown for simplicity. As shown in FIG. 2, the 5GS/EPS 200 provides a packet switching service. However, those skilled in the art will readily appreciate that the various concepts presented throughout the present application can be extended to a network that provides a circuit switching service. The NG-RAN 202 includes a new radio (NR) node B (gNB) 203 and another gNB 204. The gNB 203 provides termination of user and control plane protocols for the UE 201. The gNB 203 may be connected to another gNB 204 via an Xn interface (e.g., backhaul). The gNB 203 may also be referred to as a base station, a base transceiver station, a radio base station, a radio transceiver, a transceiver function, a basic service set (BSS), an extended service set (ESS), a transmitter receiver point (TRP), or any other appropriate terminology. The gNB 203 provides an access point to the 5GC/EPC 210 for the UE 201. Examples of the UE 201 include a cellular phone, a smartphone, a session initiation protocol (SIP) phone, a laptop, a personal digital assistant (PDA), a satellite radio, a global positioning system, a multimedia device, a video device, a digital audio player (such as an MP3 player), a camera, a game console, a drone, an aircraft, a narrowband Internet of Things device, a machine type communication device, a land vehicle, an automobile, a wearable device, or any other similar functional device. Those skilled in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld device, a user agent, a mobile client, a client, or any other appropriate terminology. The gNB 203 is connected to the 5GC/EPC 210 through an S1/NG interface. The 5GC/EPC 210 includes a mobility management entity (MME)/authentication management field (AMF)/session management function (SMF) 211, other MMEs/AMFs/SMFs 214, a service gateway (S-GW)/user plane function (UPF) 212, and a packet data network gateway (P-GW)/UPF 213. The MME/AMF/SMF 211 is a control node that handles signaling between the UE 201 and the 5GC/EPC 210. Generally, the MME/AMF/SMF 211 provides bearer and connection management. All user Internet protocol (IP) packets are transmitted through the S-GW/UPF 212, and the S-GW/UPF 212 itself is connected to the P-GW/UPF 213. The P-GW provides UE IP address allocation and other functions. The P-GW/UPF 213 is connected to the Internet service 230. The Internet service 230 includes an operator-specific Internet protocol service, which may specifically include Internet, Intranet, IP multimedia subsystem (IMS) and packet switching services.

As an embodiment, the first node in the present application includes the UE 201.

As an embodiment, the second node in the present application includes the gNB 203.

As an embodiment, a wireless link between the UE 201 and the gNB 203 includes a cellular network link.

As an embodiment, a transmitter of the first CSI report configuration includes the gNB 203.

As an embodiment, a receiver of the first CSI report configuration includes the UE 201.

As an embodiment, a performer of the action of updating the first CSI report includes the UE 201.

As an embodiment, the UE 201 supports CSI compression based on CNN.

As an embodiment, the UE 201 supports CSI compression based on AI/ML.

As an embodiment, the UE 201 supports generating a trained model or some parameters in the model by using training data.

As an embodiment, the UE 201 supports determining at least some parameters of a CNN for CSI compression through training.

As an embodiment, the gNB 203 supports decompressing CSI by using AI or ML.

### Embodiment 3

Embodiment 3 illustrates a schematic diagram of an embodiment of radio protocol architectures of a user plane and a control plane according to an embodiment of the present application, as shown in FIG. 3.

Embodiment 3 illustrates a schematic diagram of an embodiment of radio protocol architectures of a user plane and a control plane according to the present application, as shown in FIG. 3. FIG. 3 illustrates a schematic diagram of an embodiment of radio protocol architectures of a user plane 350 and a control plane 300. FIG. 3 shows a radio protocol architecture of a control plane 300 for use between a first communication node device (UE, gNB, or RSU in V2X) and a second communication node device (gNB, UE, or RSU in V2X), or between two pieces of UE, with three layers: a layer 1, a layer 2, and a layer 3. The layer 1 (L1) is a lowest layer and implements various signal processing functions of a physical layer (PHY). The L1 is referred to as the PHY 301 herein. The layer 2 (L2) 305 is above the PHY 301 and is responsible for a link between the first communication node device and the second communication node device, or between two pieces of UE. The L2 305 includes a medium access control (MAC) sub-layer 302, a radio link control (RLC) sub-layer 303, and a packet data convergence protocol (PDCP) sub-layer 304, all of which terminate at the second communication node device. The PDCP sub-layer 304 provides multiplexing between different radio bearers and logical channels. The PDCP sub-layer 304 also provides security by encrypting a data packet, and supports handover of the first communication node device between second communication node devices. The RLC sub-layer 303 provides segmentation and reassembly of upper-layer data packets, retransmission of lost data packets, and reordering of data packets to compensate for out-of-order reception caused by HARQ. The MAC sub-layer 302 provides multiplexing between a logical channel and a transmission channel. The MAC sub-layer 302 is also responsible for allocating various radio resources (such as resource blocks) in a cell between first communication node devices. The MAC sub-layer 302 is also responsible for HARQ operation. A radio resource control (RRC) sub-layer 306 in the layer 3 (L3) of the control plane 300 is responsible for obtaining radio resources (i.e., radio bearers) and configuring a lower layer using RRC signaling between the second communication node device and the first communication node device. The radio protocol architecture of the user plane 350 includes a layer 1 (L1) and a layer 2 (L2). In the radio protocol architecture of the user plane 350 for use between the first communication node device and the second communication node device, a physical layer 351, a PDCP sub-layer 354 in the L2 355, an RLC sub-layer 353 in the L2 355, and an MAC sub-layer 352 in the L2 355 are substantially the same as the corresponding layers and sub-layers in the control plane 300. However, the PDCP sub-layer 354 also provides header compression for the upper-layer data packets to reduce radio transmission overhead. The L2 355 in the user plane 350 further includes a service data adaptation protocol (SDAP) sub-layer 356. The SDAP sub-layer 356 is responsible for mapping between a QoS flow and a data radio bearer (DRB) to support service diversity. Although not shown in the figure, the first communication node device may have several upper layers above the L2 355, including a network layer (e.g., an IP layer) that terminates at the P-GW on the network side and an application layer that terminates at the other end of connection (e.g., remote UE, a server, etc.).

As an embodiment, the radio protocol architecture shown in FIG. 3 is applicable to the first node in the present application.

As an embodiment, the radio protocol architecture shown in FIG. 3 is applicable to the second node in the present application.

As an embodiment, the first CSI report configuration is generated in the RRC sub-layer 306.

As an embodiment, the higher layer in the present application refers to a layer above the physical layer.

### Embodiment 4

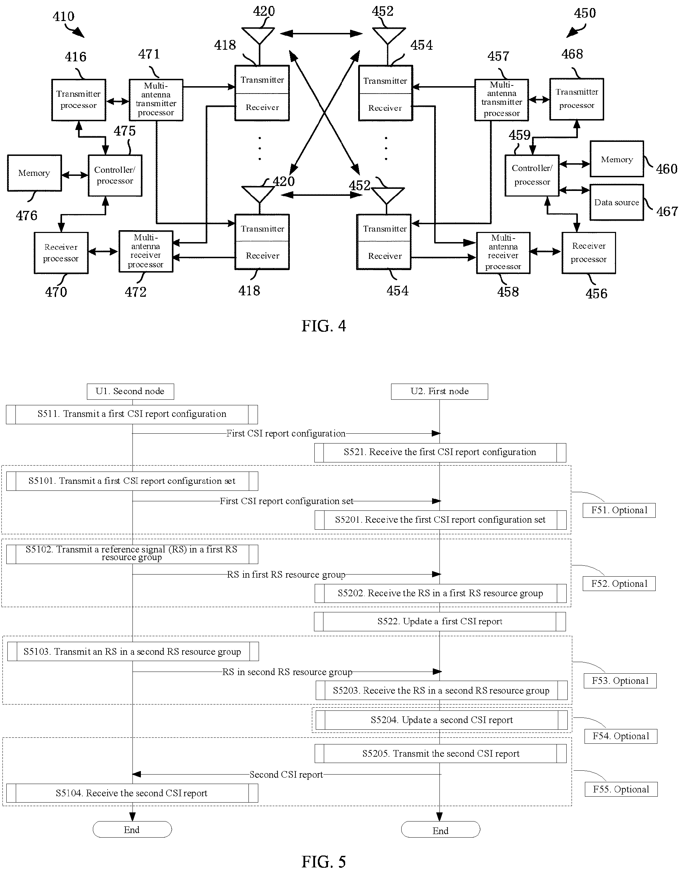

Embodiment 4 illustrates a schematic diagram of a first communication device and a second communication device according to an embodiment of the present application, as shown in FIG. 4. FIG. 4 is a block diagram of a first communication device 410 and a second communication device 450 that communicate with each other in an access network.

The first communication device 410 includes a controller/processor 475, a memory 476, a receiver processor 470, a transmitter processor 416, a multi-antenna receiver processor 472, a multi-antenna transmitter processor 471, a transmitter/receiver 418, and an antenna 420.

The second communication device 450 includes a controller/processor 459, a memory 460, a data source 467, a transmitter processor 468, a receiver processor 456, a multi-antenna transmitter processor 457, a multi-antenna receiver processor 458, a transmitter/receiver 454, and an antenna 452.

In the transmission from the first communication device 410 to the second communication device 450, at the first communication device 410, the upper-layer data packets from the core network are provided to the controller/processor 475. The controller/processor 475 implements the function of the L2. In DL, the controller/processor 475 provides header compression, encryption, packet segmentation and reordering, multiplexing between a logical channel and a transmission channel, and radio resource allocation for the second communication device 450 based on various priority metrics. The controller/processor 475 is also responsible for HARQ operation, retransmission of lost packets, and signaling to the second communication device 450. The transmitter processor 416 and the multi-antenna transmitter processor 471 implement various signal processing functions for the L1 (i.e., the physical layer). The transmitter processor 416 implements coding and interleaving to facilitate forward error correction (FEC) at the second communication device 450, and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitter processor 471 performs digital spatial precoding on an encoded and modulated symbol, including codebook-based precoding, non-codebook-based precoding, and beamforming processing, to generate one or more parallel streams. Then, the transmitter processor 416 maps each parallel stream to a sub-carrier, multiplexes the modulated symbol with a reference signal (e.g., a pilot frequency) in a time domain and/or a frequency domain, and then performs an inverse fast Fourier transform (IFFT) to generate a physical channel carrying a time-domain multi-carrier symbol stream. Subsequently, the multi-antenna transmitter processor 471 performs transmitter-side analog precoding/beamforming operation on the time-domain multi-carrier symbol stream. Each transmitter 418 converts a baseband multi-carrier symbol stream provided by the multi-antenna transmitter processor 471 into a radio-frequency stream and then provides the radio-frequency stream to a different antenna 420.

In the transmission from the first communication device 410 to the second communication device 450, at the second communication device 450, each receiver 454 receives a signal through its corresponding antenna 452. Each receiver 454 recovers information modulated onto a radio-frequency carrier, converts the radio-frequency stream into a baseband multi-carrier symbol stream, and provides the baseband multi-carrier symbol stream to the receiver processor 456. The receiver processor 456 and the multi-antenna receiver processor 458 implement various signal processing functions of the L1. The multi-antenna receiver processor 458 performs receiver-side analog precoding/beamforming operation on the baseband multi-carrier symbol stream from the receiver 454. The receiver processor 456 transforms the baseband multi-carrier symbol stream subjected to the receiver-side analog precoding/beamforming operation from the time domain to the frequency domain using a fast Fourier transform (FFT). In the frequency domain, a data signal from the physical layer and the reference signal are demultiplexed by the receiver processor 456, where the reference signal will be used for channel estimation. The data signal undergoes multi-antenna detection in the multi-antenna receiver processor 458 to recover any parallel stream destined for the second communication device 450. The symbol on each parallel stream is demodulated and recovered in the receiver processor 456, and a soft decision is generated. Subsequently, the receiver processor 456 decodes and de-interleaves the soft decision to recover upper-layer data and a control signal transmitted by the first communication device 410 on the physical channel. Then, the upper-layer data and the control signal are provided to the controller/processor 459. The controller/processor 459 implements the function of the L2. The controller/processor 459 may be associated with the memory 460 that stores program codes and data. The memory 460 may be referred to as a computer-readable medium. In DL, the controller/processor 459 provides multiplexing between a transmission channel and a logical channel, packet reassembly, decryption, header decompression, and control signal processing to recover the upper-layer data packets from the core network. Then, the upper-layer data packets are provided to all protocol layers above the L2. Various control signals may also be provided to the L3 for L3 processing. The controller/processor 459 is also responsible for error detection using an acknowledgment (ACK) and/or negative acknowledgment (NACK) protocol to support HARQ operation.

In the transmission from the second communication device 450 to the first communication device 410, at the second communication device 450, the upper-layer data packets are provided to the controller/processor 459 by using the data source 467. The data source 467 represents all protocol layers above the L2. Similar to the transmission function at the first communication device 410 described in DL, the controller/processor 459, based on the radio resource allocation of the first communication device 410, implements header compression, encryption, packet segmentation and reordering, and multiplexing between a logical channel and a transmission channel, and implements the L2 function for a user plane and a control plane. The controller/processor 459 is also responsible for HARQ operation, retransmission of lost packets, and signaling to the first communication device 410. The transmitter processor 468 performs modulation mapping and channel coding processing. The multi-antenna transmitter processor 457 conducts digital multi-antenna spatial precoding, including codebook-based precoding, non-codebook-based precoding, and beamforming processing. Subsequently, the transmitter processor 468 modulates the generated parallel stream into a multi-carrier/single-carrier symbol stream, which undergoes analog precoding/beamforming operation in the multi-antenna transmitter processor 457 and then is provided to a different antenna 452 via the transmitter 454. Each transmitter 454 first converts a baseband symbol stream provided by the multi-antenna transmitter processor 457 into a radio-frequency symbol stream, and then provides the radio-frequency symbol stream to the antenna 452.

In the transmission from the second communication device 450 to the first communication device 410, the function at the first communication device 410 is similar to the reception function at the second communication device 450 described in the transmission from the first communication device 410 to the second communication device 450. Each receiver 418 receives a radio-frequency signal through its corresponding antenna 420, converts the received radio-frequency signal into a baseband signal, and provides the baseband signal to the multi-antenna receiver processor 472 and the receiver processor 470. The receiver processor 470 and the multi-antenna receiver processor 472 together implement the function of the L1. The controller/processor 475 implements the function of the L2. The controller/processor 475 may be associated with the memory 476 that stores program codes and data. The memory 476 may be referred to as a computer-readable medium. The controller/processor 475 provides multiplexing between a transmission channel and a logical channel, packet reassembly, decryption, header decompression, and control signal processing to recover the upper-layer data packets from the second communication device 450. The upper-layer data packets from the controller/processor 475 may be provided to the core network. The controller/processor 475 is also responsible for error detection using an ACK and/or NACK protocol to support HARQ operation.

As an embodiment, the second communication device 450 includes: at least one processor and at least one memory, where the at least one memory includes computer program codes; and the at least one memory and the computer program codes are configured to be used together with the at least one processor. The second communication device 450 receives at least the first CSI report configuration and updates the first CSI report. The first CSI report configuration is used to determine the first CSI report; the first CSI report configuration includes a first higher-layer parameter and a second higher-layer parameter; the first higher-layer parameter is set to a first parameter value, which belongs to a first candidate parameter value subset; the second higher-layer parameter is used to determine a first reference signal RS resource group, which is used for channel measurement; the first CSI report does not occupy type-I processing units prior to a first symbol; and a quantity of the type-I processing units occupied by the first CSI report is related to whether the first CSI report configuration is used to generate a first function.

As an embodiment, the second communication device 450 includes: a memory storing a computer-readable instruction program. When the computer-readable instruction program is executed by at least one processor, actions are generated, where the actions include: receiving the first CSI report configuration; and updating the first CSI report.

As an embodiment, the first communication device 410 includes: at least one processor and at least one memory, where the at least one memory includes computer program codes; and the at least one memory and the computer program codes are configured to be used together with the at least one processor. The first communication device 410 transmits at least the first CSI report configuration. The first CSI report configuration is used to determine the first CSI report; the first CSI report configuration includes a first higher-layer parameter and a second higher-layer parameter; the first higher-layer parameter is set to a first parameter value, which belongs to a first candidate parameter value subset; the second higher-layer parameter is used to determine a first RS resource group, which is used for channel measurement; a target recipient of the first CSI report configuration updates the first CSI report; the first CSI report does not occupy type-I processing units prior to a first symbol; and a quantity of the type-I processing units occupied by the first CSI report is related to whether the first CSI report configuration is used to generate a first function.

As an embodiment, the first communication device 410 includes: a memory storing a computer-readable instruction program. When the computer-readable instruction program is executed by at least one processor, an action is generated, where the action includes: transmitting the first CSI report configuration.

As an embodiment, the first node in the present application includes the second communication device 450.

As an embodiment, the second node in the present application includes the first communication device 410.

As an embodiment, at least one of the antenna 452, the receiver 454, the receiver processor 456, the multi-antenna receiver processor 458, the controller/processor 459, the memory 460, or the data source 467 is used to receive the first CSI report configuration; and at least one of the antenna 420, the transmitter 418, the transmitter processor 416, the multi-antenna transmitter processor 471, the controller/processor 475, or the memory 476 is used to transmit the first CSI report configuration.

As an embodiment, at least one of the antenna 452, the receiver 454, the receiver processor 456, the multi-antenna receiver processor 458, the controller/processor 459, the memory 460, or the data source 467 is used to update the first CSI report.

As an embodiment, at least one of the antenna 452, the receiver 454, the receiver processor 456, the multi-antenna receiver processor 458, the controller/processor 459, the memory 460, or the data source 467 is used to receive the first CSI report configuration set; and at least one of the antenna 420, the transmitter 418, the transmitter processor 416, the multi-antenna transmitter processor 471, the controller/processor 475, or the memory 476 is used to transmit the first CSI report configuration set.

As an embodiment, at least one of the antenna 420, the receiver 418, the receiver processor 470, the multi-antenna receiver processor 472, the controller/processor 475, or the memory 476 is used to receive the second CSI report; and at least one of the antenna 452, the transmitter 454, the transmitter processor 468, the multi-antenna transmitter processor 457, the controller/processor 459, the memory 460, or the data source 467 is used to transmit the second CSI report.

### Embodiment 5

Embodiment 5 illustrates a flowchart of transmission according to an embodiment of the present application, as shown in FIG. 5. In FIG. 5, a second node U1 and a first node U2 are communication nodes that achieve transmission via an air interface. In FIG. 5, steps in a block F51 to a block F55 are optional separately.

For the second node U1, in step S511, a first CSI report configuration is transmitted; in step S5101, a first CSI report configuration set is transmitted; in step S5102, an RS is transmitted in a first RS resource group; in step S5103, an RS is transmitted in a second RS resource group; and in step S5104, a second CSI report is received.

For the first node U2, in step S521, a first CSI report configuration is received; in step S5201, a first CSI report configuration set is received; in step S5202, an RS is received in a first RS resource group; in step S522, a first CSI report is updated; in step S5203, an RS is received in a second RS resource group; in step S5204, a second CSI report is updated; and in step S5205, the second CSI report is transmitted.

In Embodiment 5, the first CSI report configuration is used by the first node U2 to determine the first CSI report; the first CSI report configuration includes a first higher-layer parameter and a second higher-layer parameter; the first higher-layer parameter is set to a first parameter value, which belongs to a first candidate parameter value subset; the second higher-layer parameter is used by the first node U2 to determine a first RS resource group, which is used by the first node U2 for channel measurement; the first CSI report does not occupy type-I processing units prior to a first symbol; and a quantity of the type-I processing units occupied by the first CSI report is related to whether the first CSI report configuration is used by the first node U2 to generate a first function.

As an embodiment, the first node U2 is the first node in the present application.

As an embodiment, the second node U1 is the second node in the present application.

As an embodiment, the air interface between the second node U1 and the first node U2 includes a wireless interface between base station equipment and user equipment.

As an embodiment, the air interface between the second node U1 and the first node U2 includes a wireless interface between relay node equipment and user equipment.

As an embodiment, the air interface between the second node U1 and the first node U2 includes a wireless interface between user equipment and user equipment.

As an embodiment, the second node U1 is a serving cell maintenance base station of the first node U2.

As an embodiment, the first CSI report configuration is transmitted in a physical downlink shared channel (the PDSCH).

As an embodiment, the step in the block F52 of FIG. 5 exists. The above method used in a first node for wireless communication includes: receiving the RS in the first RS resource group.

As an embodiment, the step in the block F52 of FIG. 5 exists. The above method used in a second node for wireless communication includes: transmitting the RS in the first RS resource group.

As an embodiment, the step in the block F51 of FIG. 5 exists. The first CSI report configuration set includes a second CSI report configuration, which is used by the first node U2 to determine a second CSI report.

As an embodiment, the step in the block F55 of FIG. 5 exists. The second CSI report includes first compressed CSI. First pre-compression CSI is used by the first node U2 as an input of the first function to generate the first compressed CSI.

As an embodiment, the steps in both the block F51 and the block F55 of FIG. 5 exist.

As an embodiment, the first CSI report configuration set includes at least one CSI report configuration.

As an embodiment, the first CSI report configuration set consists of the second CSI report configuration.

As an embodiment, the first CSI report configuration set includes at least one CSI report configuration other than the second CSI report configuration.

As an embodiment, any CSI report configuration in the first CSI report configuration set is carried by higher-layer signaling.

As an embodiment, any CSI report configuration in the first CSI report configuration set is carried by RRC signaling.

As an embodiment, any CSI report configuration in the first CSI report configuration set is carried by an IE.

As an embodiment, any CSI report configuration in the first CSI report configuration set is an IE.

As an embodiment, any CSI report configuration in the first CSI report configuration set includes information in some or all of fields in a CSI-ReportConfig IE.

As an embodiment, any CSI report configuration in the first CSI report configuration set is a CSI-ReportConfig IE.

As an embodiment, any CSI report configuration in the first CSI report configuration set is identified by a CSI-ReportConfigId.

As an embodiment, any two CSI report configurations in the first CSI report configuration set have different CSI-ReportConfigIds.

As an embodiment, the second CSI report configuration is identified by a CSI-ReportConfigId.

As an embodiment, the CSI-ReportConfigId for the second CSI report configuration is different from the CSI-ReportConfigId for the first CSI report configuration.

As an embodiment, the second CSI report is a CSI report for the second CSI report configuration.

As an embodiment, the second CSI report is generated according to the second CSI report configuration.

As an embodiment, the second CSI report is generated and transmitted according to the second CSI report configuration.

As an embodiment, the second CSI report includes one or more CSI report quantities.

As an embodiment, the second CSI report configuration is used to determine an RS resource group for obtaining channel measurement used to calculate the second CSI report.

As an embodiment, the second CSI report configuration is used to determine a resource group for obtaining an interference measurement used to calculate the second CSI report.

As an embodiment, the second CSI report configuration is used to indicate which CSI report quantities are included in the second CSI report.

As an embodiment, the second CSI report configuration includes a first given higher-layer parameter, with a name including "resourcesForChannelMeasurement"; and the first node obtains channel measurement used to calculate the second CSI report based on an RS resource group indicated by the first given higher-layer parameter.

As a sub-embodiment of the above embodiment, any RS resource in the RS resource group indicated by the first given higher-layer parameter is a CSI-RS resource or an SS/PBCH block resource.

As an embodiment, the second CSI report configuration includes a second given higher-layer parameter, with a name including "ResourcesForInterference"; and the first node obtains an interference measurement used to calculate the second CSI report based on a resource group indicated by the second given higher-layer parameter.

As a sub-embodiment of the above embodiment, any resource in the resource group indicated by the second given higher-layer parameter is a CSI-interference measurement (IM) resource or an NZP CSI-RS resource.

As an embodiment, the second CSI report configuration includes a third given higher-layer parameter, with a name including "reportQuantity"; and the third given higher-layer parameter indicates a CSI report quantity included in the second CSI report.

As an embodiment, the second CSI report configuration is used to indicate values of some or all of the higher-layer parameters "resourcesForChannelMeasurement", "csi-IM-ResourcesForInterference", "reportQuantity", "nzp-CSI-RS-ResourcesForInterference", "reportConfigType", "reportFreqConfiguration", "timeRestrictionForChannelMeasurements", "timeRestrictionForInterferenceMeasurements", "subbandSize", or "codebookConfig" corresponding to the second CSI report.

As an embodiment, the second CSI report includes an RI.

As an embodiment, the second CSI report includes at least one CQI.

As an embodiment, the second CSI report includes a wideband CQI.

As an embodiment, the second CSI report includes at least one sub-band CQI.

As an embodiment, the second CSI report is non-codebook-based.

As an embodiment, the second CSI report is generated based on artificial intelligence or machine learning.

As an embodiment, the second CSI report is generated based on a neural network.

As an embodiment, the meaning of transmitting a second CSI report includes: transmitting a CSI report quantity of the second CSI report.

As an embodiment, the meaning of transmitting a second CSI report includes: reporting a CSI report quantity of the second CSI report.

As an embodiment, the meaning of receiving a second CSI report includes: receiving a CSI report quantity of the second CSI report.

As an embodiment, any CSI report configuration in the first CSI report configuration set is transmitted in a PDSCH.

As an embodiment, there are two CSI report configurations in the first CSI report configuration set that are transmitted in different PDSCHs.

As an embodiment, there are two CSI report configurations in the first CSI report configuration set that are transmitted in the same PDSCH.

As an embodiment, the second CSI report is transmitted in a physical uplink shared channel (PUSCH).

As an embodiment, the second CSI report is transmitted in a physical uplink control channel (PUCCH).

As an embodiment, a measurement for a second RS resource group is used to generate the first pre-compression CSI, the second RS resource group includes at least one RS resource, and any RS resource in the second RS resource group is a CSI-RS resource or an SS/PBCH block resource.

As an embodiment, the step in the block F53 of FIG. 5 exists. The above method used in a first node for wireless communication includes: receiving an RS in the second RS resource group.

As an embodiment, the step in the block F53 of FIG. 5 exists. The above method used in a second node for wireless communication includes: transmitting an RS in the second RS resource group.

As an embodiment, the step in the block F54 of FIG. 5 exists. The above method used in a first node for wireless communication includes: updating the second CSI report.

As an embodiment, the steps in the blocks F51, F53, F54, and F55 of FIG. 5 all exist.

### Embodiment 6

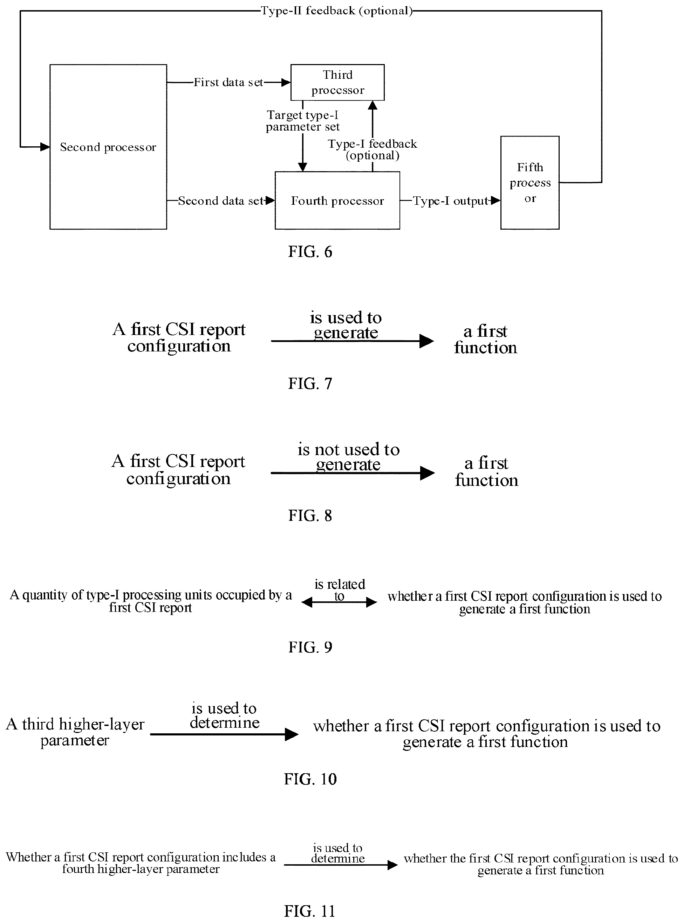

Embodiment 6 illustrates a schematic diagram of an artificial intelligence or machine learning-based processing system according to an embodiment of the present application, as shown in FIG. 6. FIG. 6 shows a second processor, a third processor, a fourth processor, and a fifth processor. In Embodiment 6, the second processor transmits a first data set to the third processor and transmits a second data set to the fourth processor. The third processor generates a target type-I parameter set based on the first data set, and the third processor transmits the generated target type-I parameter set to the fourth processor. The fourth processor processes the second data set by using the target type-I parameter set to obtain a type-I output, and the fourth processor transmits the type-I output to the fifth processor. In FIG. 6, type-I feedback and type-II feedback are optional.

As an embodiment, the fourth processor transmits type-I feedback to the third processor. The type-I feedback is used to trigger the recalculation or update of the target type-I parameter set.

As an embodiment, the fifth processor transmits type-II feedback to the second processor. The type-II feedback is used to generate the first data set or the second data set, or the type-II feedback is used to trigger the transmission of the first data set or the second data set.

As an embodiment, the second processor generates the first data set and the second data set based on a measurement of a type-I wireless signal. The type-I wireless signal includes a downlink RS.

As an embodiment, a measurement for the first RS resource group is used to generate the first data set.

As an embodiment, a measurement for the second RS resource group is used to generate the second data set.

As an embodiment, the second processor and the fourth processor belong to the first node, and the fifth processor belongs to the second node.

As an embodiment, the second CSI report belongs to the type-I output.

As an embodiment, the first compressed CSI belongs to the type-I output.

As an embodiment, the first pre-compression CSI belongs to the second data set.

As an embodiment, the third processor belongs to the first node.

The above embodiment avoids the transmission of the first data set to the second node.

As an embodiment, the first data set includes training data, the second data set includes inference data, the third processor is used for model training, and a trained model is described by the target type-I parameter set.

The above description of the training is applicable to the first function and the second function in the present application.

As an embodiment, the fourth processor builds a model based on the target type-I parameter set, and then inputs the second data set to the built model to obtain the type-I output.

As an embodiment, the fourth processor includes the first function.

As an embodiment, the first function is described by the target type-I parameter set.

As an embodiment, the target type-I parameter set is used to construct the first function.

As an embodiment, the third processor is used for model training. The target type-I parameter set is used to describe a trained model. The trained model is used to construct the first function.

As an embodiment, the first function is used to generate the type-I output.

As an embodiment, the fourth processor generates a recovered data set based on the type-I output, and an error between the recovered data set and the second data set is used to generate the type-I feedback.

As a sub-embodiment of the above embodiment, the generation of the recovered data set adopts an inverse operation similar to that of the target type-I parameter set.

As a sub-embodiment of the above embodiment, the recovered data set is generated using an inverse operation similar to that of the target type-I parameter set.

As an embodiment, the type-I feedback is used to reflect the performance of the trained model; and when the performance of the trained model fails to meet the requirements, the third processor will recalculate the target type-I parameter set.

As an embodiment, when an error is too large or there has been no update for an excessively long time, the performance of the trained model is considered to fail to meet the requirements.

As an embodiment, the fourth processor belongs to a second node, and the first node reports the target type-I parameter set to the second node.

As an embodiment, the fifth processor includes the second function.

As an embodiment, an input of the second function belongs to the type-I output.

As an embodiment, the meaning of the statement where whether the first CSI report configuration is used to generate a first function includes: whether the first CSI report configuration is used to generate the target type-I parameter set.

As an embodiment, when the first CSI report configuration is used to generate the first function, the first CSI report configuration is used to generate the target type-I parameter set.

As an embodiment, when the first CSI report configuration is not used to generate the first function, the first CSI report configuration is not used to generate the target type-I parameter set.

As an embodiment, when the first CSI report configuration is used to generate the first function, the action of updating the first CSI report is used to generate the target type-I parameter set.

As an embodiment, when the first CSI report configuration is used to generate the first function, the action of updating the first CSI report is used to generate the first data set.

As an embodiment, the type-II CSI report quantity includes the target type-I parameter set.

As an embodiment, the type-II CSI report quantity belongs to the target type-I parameter set.

As an embodiment, when the first CSI report configuration is used to generate the first function, a measurement for the first RS resource group is used to generate the first data set.

As an embodiment, when the first CSI report configuration is used to generate the first function, a measurement for the first RS resource group is used to obtain channel measurement used to generate the first data set.

As an embodiment, the target type-I parameter set includes one or more of a convolution kernel size, the number of convolutional layers, a convolution stride, a pooling kernel size, a pooling kernel stride, a pooling function, an activation function, or the number of feature maps.

As an embodiment, the target type-I parameter set includes one or more of a convolution kernel, a pooling kernel, a pooling function, an activation function, parameters of the pooling function, or parameters of the activation function.

### Embodiment 7

Embodiment 7 illustrates a schematic diagram in which a first CSI report configuration is used to generate a first function according to an embodiment of the present application, as shown in FIG. 7.

As an embodiment, the meaning of the statement where the first CSI report configuration is used to generate the first function includes: the first CSI report configuration is used to train the first function.

As an embodiment, the meaning of the statement where the first CSI report configuration is used to generate the first function includes: an action of updating a CSI report for the first CSI report configuration is used to train the first function.

As an embodiment, the meaning of the statement where the first CSI report configuration is used to generate the first function includes: an action of updating a CSI report for the first CSI report configuration includes at least some operations in training of the first function.

As an embodiment, the meaning of the statement where the first CSI report configuration is used to generate the first function includes: the first CSI report configuration is used to generate the target type-I parameter set.

As an embodiment, the meaning of the statement where the first CSI report configuration is used to generate the first function includes: an action of updating a CSI report for the first CSI report configuration is used to generate the target type-I parameter set.

As an embodiment, the meaning of the statement where the first CSI report configuration is used to generate the first function includes: the first CSI report configuration is used to configure an RS resource group for obtaining data required to train the first function.

As an embodiment, the meaning of the statement where the first CSI report configuration is used to generate the first function includes: an action of updating a CSI report for the first CSI report configuration includes obtaining a channel measurement for training the first function.

As an embodiment, the meaning of the statement where the first CSI report configuration is used to generate the first function includes: the action of updating the first CSI report is used to train the first function.

As an embodiment, the meaning of the statement where the first CSI report configuration is used to generate the first function includes: the action of updating the first CSI report includes some operations in training of the first function.

As an embodiment, the meaning of the statement where the first CSI report configuration is used to generate the first function includes: the action of updating the first CSI report includes obtaining a channel measurement for training the first function.

As an embodiment, the meaning of the statement where the first CSI report configuration is used to generate the first function includes: the action of updating the first CSI report includes obtaining a channel measurement for training the first function by measuring the first RS resource group.

As an embodiment, the meaning of the statement where the first CSI report configuration is used to generate the first function includes: the first CSI report configuration is used for model training. The first function is obtained based on the model training.

As an embodiment, the meaning of the statement where the first CSI report configuration is used to generate the first function includes: an action of updating a CSI report for the first CSI report configuration is used for the model training.

As an embodiment, the meaning of the statement where the first CSI report configuration is used to generate the first function includes: an action of updating a CSI report for the first CSI report configuration includes at least some operations in the model training.

As an embodiment, the meaning of the statement where the first CSI report configuration is used to generate the first function includes: the first CSI report configuration is used to configure an RS resource group for obtaining data required for the model training.

As an embodiment, the meaning of the statement where the first CSI report configuration is used to generate the first function includes: an action of updating a CSI report for the first CSI report configuration includes obtaining a channel measurement for the model training.

As an embodiment, the meaning of the statement where the first CSI report configuration is used to generate the first function includes: the action of updating the first CSI report is used for the model training.

As an embodiment, the meaning of the statement where the first CSI report configuration is used to generate the first function includes: the action of updating the first CSI report includes some operations in the model training.

As an embodiment, the meaning of the statement where the first CSI report configuration is used to generate the first function includes: the action of updating the first CSI report includes obtaining a channel measurement for the model training.

As an embodiment, the meaning of the statement where the first CSI report configuration is used to generate the first function includes: the action of updating the first CSI report includes obtaining a channel measurement for the model training by measuring the first RS resource group.

As an embodiment, the meaning of the statement where the first CSI report configuration is used to generate the first function includes: the first CSI report configuration is used to configure a range of frequency-domain resources for which an input of the first function is targeted.

As an embodiment, the meaning of the statement where the first CSI report configuration is used to generate the first function includes: the first CSI report configuration is used to configure a range of frequency-domain resources targeted by an input of the first function.

As an embodiment, the meaning of the statement where the first CSI report configuration is used to generate the first function includes: the first CSI report configuration is used to configure a range of a quantity of RS ports corresponding to an input of the first function.

As an embodiment, the meaning of measuring one RS resource group includes: an RS transmitted in each RS resource in the one RS resource group is measured.

As an embodiment, the meaning of measuring one RS resource group includes: an RS transmitted in at least one RS resource in the one RS resource group is measured.

### Embodiment 8

Embodiment 8 illustrates a schematic diagram in which a first CSI report configuration is not used to generate a first function according to an embodiment of the present application, as shown in FIG. 8.

As an embodiment, the meaning of the statement where the first CSI report configuration is not used to generate the first function includes: an action of updating a CSI report for the first CSI report configuration is not used to train the first function.

As an embodiment, the meaning of the statement where the first CSI report configuration is not used to generate the first function includes: an action of updating a CSI report for the first CSI report configuration does not include obtaining a channel measurement for training the first function.

As an embodiment, the meaning of the statement where the first CSI report configuration is not used to generate the first function includes: the action of updating the first CSI report is not used to train the first function.

As an embodiment, the meaning of the statement where the first CSI report configuration is not used to generate the first function includes: the action of updating the first CSI report does not include obtaining a channel measurement for training the first function.

### Embodiment 9

Embodiment 9 illustrates a schematic diagram in which a quantity of type-I processing units occupied by a first CSI report is related to whether a first CSI report configuration is used to generate a first function according to an embodiment of the present application, as shown in FIG. 9.

As an embodiment, when the first CSI report configuration is not used to generate the first function, the quantity of the type-I processing units occupied by the first CSI report is equal to 0 or 1.

As an embodiment, when the first CSI report configuration is not used to generate the first function, the quantity of the type-I processing units occupied by the first CSI report is related to whether the first RS resource group is configured with a higher-layer parameter "trs-Info".

As an embodiment, when the first CSI report configuration is not used to generate the first function and the first RS resource group is configured with a higher-layer parameter "trs-Info", the quantity of the type-I processing units occupied by the first CSI report is equal to 0.

As an embodiment, when the first CSI report configuration is not used to generate the first function and the first RS resource group is not configured with a higher-layer parameter "trs-Info", the quantity of the type-I processing units occupied by the first CSI report is equal to 1.

As an embodiment, when the first CSI report configuration is not used to generate the first function, the quantity of the type-I processing units occupied by the first CSI report is related to a quantity of RS resources included in the first RS resource group.

As a sub-embodiment of the above embodiment, the quantity of the type-I processing units occupied by the first CSI report changes with the quantity of RS resources included in the first RS resource group.

As a sub-embodiment of the above embodiment, the quantity of the type-I processing units occupied by the first CSI report is linearly related to the quantity of RS resources included in the first RS resource group, and a linear coefficient between the quantity of the type-I processing units occupied by the first CSI report and the quantity of RS resources included in the first RS resource group is a positive real number.

As a sub-embodiment of the above embodiment, when the quantity of RS resources included in the first RS resource group is equal to A1, the quantity of the type-I processing units occupied by the first CSI report is equal to B1; and when the quantity of RS resources included in the first RS resource group is equal to A2, the quantity of the type-I processing units occupied by the first CSI report is equal to B2, where A1 is greater than A2, and B1 is not less than B2.

As an embodiment, when the first CSI report configuration is not used to generate the first function, the quantity of the type-I processing units occupied by the first CSI report is related to a maximum value of a quantity of RS ports of RS resources in the first RS resource group.

As a sub-embodiment of the above embodiment, the quantity of the type-I processing units occupied by the first CSI report changes with the maximum value of a quantity of RS ports of RS resources in the first RS resource group.

As a sub-embodiment of the above embodiment, when the maximum value of a quantity of RS ports of RS resources in the first RS resource group is equal to A1, the quantity of the type-I processing units occupied by the first CSI report is equal to B1; and when the maximum value of a quantity of RS ports of RS resources in the first RS resource group is equal to A2, the quantity of the type-I processing units occupied by the first CSI report is equal to B2, where A1 is greater than A2, and B1 is not less than B2.

As an embodiment, when the first CSI report configuration is used to generate the first function, the quantity of the type-I processing units occupied by the first CSI report is related to a bandwidth of frequency-domain resources occupied by the first RS resource group.

As a sub-embodiment of the above embodiment, the bandwidth of frequency-domain resources occupied by the first RS resource group is represented as a sub-band quantity.

As a sub-embodiment of the above embodiment, the bandwidth of frequency-domain resources occupied by the first RS resource group is represented as a resource block (RB) quantity.

As a sub-embodiment of the above embodiment, the unit of the bandwidth of frequency-domain resources occupied by the first RS resource group is MHz or KHz.

As a sub-embodiment of the above embodiment, the quantity of the type-I processing units occupied by the first CSI report changes with the bandwidth of frequency-domain resources occupied by the first RS resource group.

As a sub-embodiment of the above embodiment, when the bandwidth of frequency-domain resources occupied by the first RS resource group is equal to A1, the quantity of the type-I processing units occupied by the first CSI report is equal to B1; and when the bandwidth of frequency-domain resources occupied by the first RS resource group is equal to A2, the quantity of the type-I processing units occupied by the first CSI report is equal to B2, where A1 is greater than A2, and B1 is not less than B2.

As an embodiment, when the first CSI report configuration is used to generate the first function, the quantity of the type-I processing units occupied by the first CSI report is equal to a quantity of the remaining type-I processing units, where the quantity of the remaining type-I processing units is equal to a first threshold minus a first integer, the first threshold is indicated by a higher-layer parameter, and the first integer is equal to a quantity of the type-I processing units that have already been occupied in the first symbol.

As an embodiment, when a first integer is equal to 0, if the first CSI report configuration is used to generate the first function, the quantity of the type-I processing units occupied by the first CSI report is equal to a first threshold, where the first threshold is indicated by a higher-layer parameter, and the first integer is equal to a quantity of the type-I processing units that have already been occupied in the first symbol.

As an embodiment, the first threshold is indicated by a fifth higher-layer parameter, with a name including "simultaneousCSI-Reports".

As an embodiment, the fifth higher-layer parameter is either "simultaneousCSI-ReportsPerCC" or "simultaneousCSI-ReportsAllCC".

As an embodiment, the first threshold is indicated by the first node through a higher-layer parameter.

As an embodiment, the first threshold is a quantity of simultaneous CSI calculations supported by the first node.

As an embodiment, the first threshold is a quantity of the type-I processing units supported by the first node.

As an embodiment, the first threshold is a maximum quantity of the type-I processing units that can be occupied in the same OFDM symbol.

As an embodiment, the first integer is equal to a quantity of the type-I processing units that have already been occupied in the first symbol before the quantity of the type-I processing units occupied by the first CSI report is determined.

As an embodiment, the first integer is equal to a quantity of the type-I processing units that have already been occupied in the first symbol before a CSI report group that occupies the type-I processing units starting from the first symbol is determined.

As an embodiment, the quantity of the type-I processing units occupied by the first CSI report is related to both the second higher-layer parameter and whether the first CSI report configuration is used to generate the first function.

As a sub-embodiment of the above-mentioned embodiment, the fact that the quantity of the type-I processing units occupied by the first CSI report is related to the second higher-layer parameter is reflected in that the quantity of the type-I processing units occupied by the first CSI report is related to the first RS resource group.

As an embodiment, when the first CSI report configuration is not used to generate the first function, the quantity of the type-I processing units occupied by the first CSI report is related to the second higher-layer parameter.

As an embodiment, only when the first CSI report configuration is not used to generate the first function, the quantity of the type-I processing units occupied by the first CSI report is related to the second higher-layer parameter.

### Embodiment 10

Embodiment 10 illustrates a schematic diagram in which a third higher-layer parameter is used to determine whether a first CSI report configuration is used to generate a first function according to an embodiment of the present application, as shown in FIG. 10.

As an embodiment, the third higher-layer parameter is used by the first node to determine whether the first CSI report configuration is used to generate the first function.

As an embodiment, a name of the third higher-layer parameter includes "codebookConfig".

As an embodiment, the third higher-layer parameter is a higher-layer parameter "codebookConfig".

As an embodiment, the third higher-layer parameter is a higher-layer parameter "codebookType".

As an embodiment, the third higher-layer parameter is a higher-layer parameter "subType".

As an embodiment, the third higher-layer parameter includes some or all of information in at least one field of the first CSI report configuration.

As an embodiment, the first higher-layer parameter, the second higher-layer parameter, and the third higher-layer parameter are carried by different fields of the first CSI report configuration respectively.

As an embodiment, the third higher-layer parameter explicitly indicates whether the first CSI report configuration is used to generate the first function.

As an embodiment, the third higher-layer parameter implicitly indicates whether the first CSI report configuration is used to generate the first function.

As an embodiment, the third higher-layer parameter implicitly indicates whether the first CSI report configuration is used to generate the first function by indicating other information.

As an embodiment, when a value of the third higher-layer parameter belongs to a second candidate parameter value subset, the first CSI report configuration is used to generate the first function, where the second candidate parameter value subset includes at least one candidate parameter value.

As a sub-embodiment of the above embodiment, when a value of the third higher-layer parameter does not belong to the second candidate parameter value subset, the first CSI report configuration is not used to generate the first function.

As a sub-embodiment of the above embodiment, candidate values of the third higher-layer parameter include the second candidate parameter value subset and at least one parameter value that does not belong to the second candidate parameter value subset.

As an embodiment, the third higher-layer parameter indicates a second parameter value, and when the second parameter value belongs to a second candidate parameter value subset, the first CSI report configuration is used to generate the first function, where the second candidate parameter value subset includes at least one candidate parameter value.

As a sub-embodiment of the above embodiment, when the second parameter value does not belong to the second candidate parameter value subset, the first CSI report configuration is not used to generate the first function.

As a sub-embodiment of the above embodiment, the third higher-layer parameter indicates the second parameter value from a second candidate parameter value set, which includes the second candidate parameter value subset and at least one parameter value that does not belong to the second candidate parameter value subset.

As an embodiment, the second candidate parameter value subset includes only one candidate parameter value.

As an embodiment, the second candidate parameter value subset includes a plurality of candidate parameter values.

As an embodiment, the third higher-layer parameter indicates a type of the first CSI report configuration.

As an embodiment, a type of the first CSI report configuration is one of a first type set, which includes a codebook-based CSI report, and further includes at least one of a non-linearity-based CSI report, a non-codebook-based CSI report, an artificial intelligence or machine learning-based CSI report, a neural network-based CSI report, a compressed CSI report, or a CNN-based CSI report.

As an embodiment, the codebook-based CSI report includes a codebook-based PMI.

As an embodiment, the non-codebook-based CSI report includes a non-codebook-based PMI.

As an embodiment, the non-linearity-based CSI report includes a non-linearity-based PMI.

As an embodiment, when a type of the first CSI report configuration belongs to a first type subset, the first CSI report configuration is not used to generate the first function, where the first type subset includes a codebook-based CSI report.

As a sub-embodiment of the above embodiment, the first type subset consists of a codebook-based CSI report.

As a sub-embodiment of the above embodiment, when a type of the first CSI report configuration does not belong to the first type subset, the first CSI report configuration is used to generate the first function.

As an embodiment, when a type of the first CSI report configuration belongs to a second type subset, the first CSI report configuration is used to generate the first function, where the second type subset includes at least one of a non-linearity-based CSI report, a non-codebook-based CSI report, an artificial intelligence or machine learning-based CSI report, a neural network-based CSI report, a compressed CSI report, or a CNN-based CSI report.

As a sub-embodiment of the above embodiment, when a type of the first CSI report configuration does not belong to the second type subset, the first CSI report configuration is not used to generate the first function.

As an embodiment, the third higher-layer parameter indicates a codebook type of the first CSI report configuration.

As an embodiment, the codebook type includes "type1" and "type2".

As a sub-embodiment of the above embodiment, the codebook type further includes at least one of other types.

As an embodiment, the codebook type includes "typeI-SinglePanel", "typeI-MultiPanel", "typeII", "typeII-PortSelection", "typeII-r16", "typeII-PortSelection-r16", and "typeII-PortSelection-r17".

As a sub-embodiment of the above embodiment, the codebook type further includes at least one of other types.

As an embodiment, when a codebook type of the first CSI report configuration belongs to a third type subset, the first CSI report configuration is not used to generate the first function.

As a sub-embodiment of the above embodiment, the third type subset includes "type 1" and "type2".

As a sub-embodiment of the above embodiment, the third type subset consists of "type 1" and "type2".

As a sub-embodiment of the above embodiment, the third type subset includes "typeI-SinglePanel", "typel-MultiPanel", "typeII", "typeII-PortSelection", "typeII-r16", "typeII-PortSelection-r16", and "typeII-PortSelection-r17".

As a sub-embodiment of the above embodiment, the third type subset consists of "typeI-SinglePanel", "typeI-MultiPanel", "typeII", "typeII-PortSelection", "typeII-r16", "typeII-PortSelection-r16", and "typeII-PortSelection-r17".

As a sub-embodiment of the above embodiment, when a codebook type of the first CSI report configuration does not belong to the third type subset, the first CSI report configuration is used to generate the first function.

As an embodiment, when a codebook type of the first CSI report configuration belongs to a fourth type subset, the first CSI report configuration is used to generate the first function.

As a sub-embodiment of the above embodiment, the fourth type subset does not include "type1" and "type2".

As a sub-embodiment of the above embodiment, the fourth type subset does not include "typeI-SinglePanel", "typel-MultiPanel", "typeII", "typeII-PortSelection", "typeII-r16", "typeII-PortSelection-r16", and "typeII-PortSelection-r17".

As a sub-embodiment of the above embodiment, when a codebook type of the first CSI report configuration does not belong to the fourth type subset, the first CSI report configuration is not used to generate the first function.

### Embodiment 11

Embodiment 11 illustrates a schematic diagram in which whether a first CSI report configuration includes a fourth higher-layer parameter is used to determine whether the first CSI report configuration is used to generate a first function according to an embodiment of the present application, as shown in FIG. 11.

As an embodiment, whether the first CSI report configuration includes the fourth higher-layer parameter is used by the first node to determine whether the first CSI report configuration is used to generate the first function.

As an embodiment, when the first CSI report configuration includes the fourth higher-layer parameter, the first CSI report configuration is used to generate the first function.

As an embodiment, when the first CSI report configuration does not include the fourth higher-layer parameter, the first CSI report configuration is not used to generate the first function.

As an embodiment, when the first CSI report configuration does not include the fourth higher-layer parameter, the first CSI report configuration is used to generate the first function.

As an embodiment, when the first CSI report configuration includes the fourth higher-layer parameter, the first CSI report configuration is not used to generate the first function.

As an embodiment, when the first CSI report configuration includes the fourth higher-layer parameter, the first CSI report configuration is used to generate the first function, where the fourth higher-layer parameter indicates a first index, which is associated with the first function.

As a sub-embodiment of the above embodiment, the first index is used to identify the first function.

As a sub-embodiment of the above embodiment, the first index is used to identify a third CSI report configuration, and the first function is used to generate a CSI report for the third CSI report configuration.

As a sub-embodiment of the above embodiment, the first index is used to identify a second RS resource group, and a measurement for the second RS resource group is used to generate an input of the first function.

As a sub-embodiment of the above embodiment, the first index is used to identify a second RS resource group, and channel measurement obtained based on the second RS resource group is used to generate an input of the first function.

As a sub-embodiment of the above embodiment, the first index is related to a range of a wireless channel to which the first function is applicable.

As a sub-embodiment of the above embodiment, the first index is used to indicate a range of a wireless channel to which the first function is applicable.

As a sub-embodiment of the above embodiment, the first index is related to a model of the first function.

As an embodiment, a model of the first function includes one or more of a convolution kernel size, the number of convolutional layers, a convolution stride, a pooling kernel size, a pooling kernel stride, a pooling function, an activation function, or the number of feature maps.

As an embodiment, the first function is constructed on the basis of applying the target type-I parameter set to a model of the first function.

As a sub-embodiment of the above embodiment, the target type-I parameter set includes one or more of a convolution kernel, a pooling kernel, a pooling function, an activation function, parameters of the pooling function, or parameters of the activation function.

As an embodiment, if the first CSI report configuration includes the fourth higher-layer parameter, the first higher-layer parameter, the second higher-layer parameter, and the fourth higher-layer parameter are carried by different fields of the first CSI report configuration respectively.

### Embodiment 12

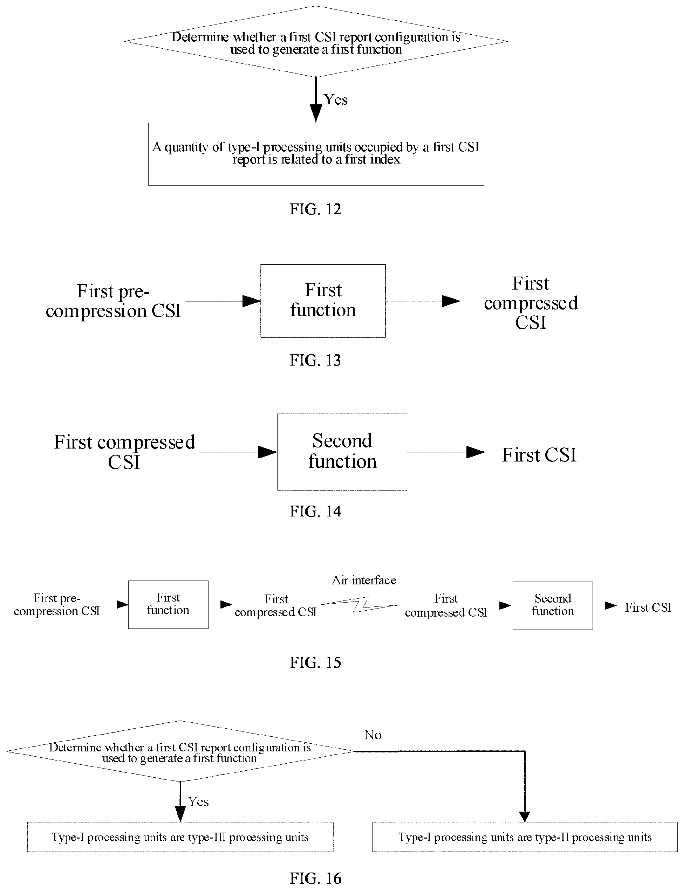

Embodiment 12 illustrates a schematic diagram in which when a first CSI report configuration is used to generate a first function, a quantity of type-I processing units occupied by a first CSI report is related to a first index according to an embodiment of the present application, as shown in FIG. 12.

As an embodiment, the first index is a non-negative integer.

As an embodiment, the first index includes a character string.

As an embodiment, the meaning of the statement where the first function is associated with the first index includes: the first index is used to identify the first function.

As an embodiment, the meaning of the statement where the first function is associated with the first index includes: configuration information of the first function includes the first index.

As an embodiment, the meaning of the statement where the first function is associated with the first index includes: the first index is related to a range of a wireless channel to which the first function is applicable.

As an embodiment, the meaning of the statement where the first function is associated with the first index includes: the first index is used to determine a range of a wireless channel to which the first function is applicable.

As an embodiment, the meaning of the statement where the first function is associated with the first index includes: the first index is used to indicate a range of a wireless channel to which the first function is applicable.

As an embodiment, the meaning of the statement where the first function is associated with the first index includes: a range of a wireless channel to which the first function is applicable is used to determine the first index.

As an embodiment, the first index is used by the first node to determine a range of a wireless channel to which the first function is applicable.

As an embodiment, a range of a wireless channel to which the first function is applicable is used by the second node to determine the first index.

As an embodiment, the first index is indicated to the first node by the second node.

As an embodiment, the first index is indicated to the second node by the first node.

As an embodiment, a range of the wireless channel includes one or more of Dense Urban, Urban Macro, Urban Micro, or rural macro.

As an embodiment, a range of the wireless channel includes at least one of a carrier frequency, a carrier frequency range, or a frequency range.

As an embodiment, a range of the wireless channel includes one or more of a bandwidth range of the wireless channel, a range of the included sub-band quantity, a range of a transmitter port quantity, a range of a receiver port quantity, a range of a multi-path quantity, a range of delay spread, a range of Doppler spread, a range of Doppler shift, a range of average delay, or whether a line of sight (LOS) path is included.

As an embodiment, a range of a wireless channel to which the first function is applicable includes one or more of a bandwidth range of frequency-domain resources targeted by an input of the first function, a range of a sub-band quantity included in frequency-domain resources targeted by an input of the first function, a range of a multi-path quantity corresponding to an input of the first function, a range of a transmitter port quantity corresponding to an input of the first function, a range of a receiver port quantity corresponding to an input of the first function, a range of an eigenvector quantity of each sub-band included in an input of the first function, or a range of the number of layers corresponding to an input of the first function.

As an embodiment, a range of a wireless channel to which the first function is applicable includes one or more of a bandwidth range of frequency-domain resources targeted by an output of the first function, a range of a sub-band quantity included in frequency-domain resources targeted by an output of the first function, or a range of the number of layers corresponding to an output of the first function.

As an embodiment, the first index is used to determine the quantity of the type-I processing units occupied by the first CSI report.

As an embodiment, the meaning of the statement where the quantity of the type-I processing units occupied by the first CSI report is related to the first index includes: the quantity of the type-I processing units occupied by the first CSI report is related to a range of a wireless channel to which the first function is applicable.

As an embodiment, the meaning of the statement where the quantity of the type-I processing units occupied by the first CSI report is related to the first index includes: a range of a wireless channel to which the first function is applicable is used to determine the quantity of the type-I processing units occupied by the first CSI report.

As an embodiment, the meaning of the statement where the quantity of the type-I processing units occupied by the first CSI report is related to the first index includes: the first function corresponds to a target integer, which is a non-negative integer; and the quantity of the type-I processing units occupied by the first CSI report is equal to the target integer.

As an embodiment, the target integer is configurable.

As an embodiment, higher-layer signaling is used to configure the target integer.

As an embodiment, configuration information of the first function includes the target integer.

As an embodiment, the first function is one of N functions, N indexes are associated with the N functions respectively, and the first index is an index in the N indexes that is associated with the first function; the N functions correspond to N integers respectively, which are N non-negative integers respectively; and the quantity of the type-I processing units occupied by the first CSI report is equal to an integer in the N integers that corresponds to the first function.

As a sub-embodiment of the above embodiment, there are two unequal integers in the N integers.

As a sub-embodiment of the above embodiment, there are two functions in the N functions that are applicable to different ranges of wireless channels.

As a sub-embodiment of the above embodiment, any two functions in the N functions are applicable to different ranges of wireless channels.

As a sub-embodiment of the above embodiment, the N indexes are pairwise different.

As an embodiment, the first CSI report configuration includes the first index.

As an embodiment, second information block is used to indicate a model of the first function, and the second information block indicates the first index.

As a sub-embodiment of the above embodiment, the second information block indicates the target integer.

As a sub-embodiment of the above embodiment, a transmitter of the second information block is the first node, and a target recipient of the second information block includes the second node.

As a sub-embodiment of the above embodiment, a transmitter of the second information block is the second node, and a target recipient of the second information block includes the first node.

As an embodiment, the meaning of the statement where the quantity of the type-I processing units occupied by the first CSI report is related to a first index includes: a first rank threshold is related to the first function, and the quantity of the type-I processing units occupied by the first CSI report is related to the first rank threshold.

As an embodiment, the first rank threshold is a maximum value of the number of layers corresponding to the first function.

As an embodiment, the first rank threshold is related to a range of a wireless channel to which the first function is applicable.

As an embodiment, the first rank threshold is associated with characteristics of a wireless channel, so a range of a wireless channel to which the first function is applicable may be indicated by the first rank threshold.

As an embodiment, the first rank threshold is used to determine the quantity of the type-I processing units occupied by the first CSI report.

As an embodiment, the quantity of the type-I processing units occupied by the first CSI report changes with the first rank threshold.

As a sub-embodiment of the above embodiment, when the first rank threshold is equal to A1, the quantity of the type-I processing units occupied by the first CSI report is equal to B1; and when the first rank threshold is equal to A2, the quantity of the type-I processing units occupied by the first CSI report is equal to B2, where A1 is greater than A2, and B1 is not less than B2.

As an embodiment, the first rank threshold is configurable.

As an embodiment, the first rank threshold is configured for the first function.

As an embodiment, the first rank threshold does not need to be configured.

As an embodiment, the rank refers to a rank.

As an embodiment, the rank refers to the number of layers.

As an embodiment, the rank refers to the number of multiple input multiple output (MIMO) layers.

As an embodiment, the meaning of the statement where the quantity of the type-I processing units occupied by the first CSI report is related to a first index includes: a first bandwidth threshold is related to the first function, and the quantity of the type-I processing units occupied by the first CSI report is related to the first bandwidth threshold.

As an embodiment, the first bandwidth threshold is a maximum value of a bandwidth of frequency-domain resources targeted by an input of the first function.

As an embodiment, the first bandwidth threshold is represented as a sub-band quantity.

As an embodiment, the first bandwidth threshold is represented as a resource block (RB) quantity.

As an embodiment, the unit of the first bandwidth threshold is MHz or KHz.

As an embodiment, the first bandwidth threshold is related to a range of a wireless channel to which the first function is applicable.

As an embodiment, the first bandwidth threshold is associated with characteristics of a wireless channel, so a range of a wireless channel to which the first function is applicable may be indicated by the first bandwidth threshold.

As an embodiment, the first bandwidth threshold is used to determine the quantity of the type-I processing units occupied by the first CSI report.

As an embodiment, the quantity of the type-I processing units occupied by the first CSI report changes with the first bandwidth threshold.

As an embodiment, when the first bandwidth threshold is equal to A1, the quantity of the type-I processing units occupied by the first CSI report is equal to B1; and when the first bandwidth threshold is equal to A2, the quantity of the type-I processing units occupied by the first CSI report is equal to B2, where A1 is greater than A2, and B1 is not less than B2.

As an embodiment, the first bandwidth threshold is configurable.

As an embodiment, the first bandwidth threshold is configured for the first function.

As an embodiment, the first bandwidth threshold does not need to be configured.

As an embodiment, the meaning of the statement where the quantity of the type-I processing units occupied by the first CSI report is related to a first index includes: a first port quantity threshold is related to the first function, and the quantity of the type-I processing units occupied by the first CSI report is related to the first port quantity threshold.

As an embodiment, the first port quantity threshold is a maximum value of a transmitter port quantity corresponding to an input of the first function.

As an embodiment, the first port quantity threshold is a maximum value of a receiver port quantity corresponding to an input of the first function.

As an embodiment, the first port quantity threshold is related to a range of a wireless channel to which the first function is applicable.

As an embodiment, the first port quantity threshold is associated with characteristics of a wireless channel, so a range of a wireless channel to which the first function is applicable may be indicated by the first port quantity threshold.

As an embodiment, the first port quantity threshold is used to determine the quantity of the type-I processing units occupied by the first CSI report.

As an embodiment, the quantity of the type-I processing units occupied by the first CSI report changes with the first port quantity threshold.

As an embodiment, when the first port quantity threshold is equal to A1, the quantity of the type-I processing units occupied by the first CSI report is equal to B1; and when the first port quantity threshold is equal to A2, the quantity of the type-I processing units occupied by the first CSI report is equal to B2, where A1 is greater than A2, and B1 is not less than B2.

As an embodiment, the first port quantity threshold is configurable.

As an embodiment, the first port quantity threshold is configured for the first function.

As an embodiment, the first port quantity threshold does not need to be configured.

As an embodiment, the port includes an RS port.

As an embodiment, the port includes an antenna port.

### Embodiment 13

Embodiment 13 illustrates a schematic diagram of a first function, first compressed CSI, and first pre-compression CSI according to an embodiment of the present application, as shown in FIG. 13. In Embodiment 13, the first pre-compression CSI is used by the first node as an input of the first function to generate the first compressed CSI.

As an embodiment, the first compressed CSI is non-codebook-based.

As an embodiment, the first compressed CSI is generated based on artificial intelligence or machine learning.

As an embodiment, the first compressed CSI is generated based on a neural network.

As an embodiment, the first compressed CSI is generated based on a CNN.

As an embodiment, CSI recovered by a target recipient of the first compressed CSI based on the first compressed CSI is unavailable to the first node.

As an embodiment, the first compressed CSI is used for precoding, and the first compressed CSI does not include a codeword index.

As an embodiment, the first compressed CSI includes a plurality of bits.

As a sub-embodiment of the above embodiment, the first compressed CSI includes at least one matrix.

As a sub-embodiment of the above embodiment, elements of any matrix in the at least one matrix are complex numbers.

As a sub-embodiment of the above embodiment, elements of any matrix in the at least one matrix are real numbers.

As an embodiment, the first compressed CSI includes a PMI.

As an embodiment, the first compressed CSI includes a compressed PMI.

As an embodiment, the first compressed CSI includes at least one of a CQI or an RI.

As an embodiment, the first compressed CSI includes at least one of a CQI, a CRI, or an RI.

As an embodiment, the first compressed CSI includes at least one channel matrix.

As an embodiment, the first compressed CSI includes information of at least one channel matrix.

As an embodiment, the first compressed CSI includes at least one compressed channel matrix.

As an embodiment, the first compressed CSI includes at least one eigenvector.

As an embodiment, the first compressed CSI includes information of at least one eigenvector.

As an embodiment, the first compressed CSI includes at least one compressed eigenvector.

As an embodiment, the first pre-compression CSI includes a PMI.

As an embodiment, the first pre-compression CSI includes at least one of a CQI, a CRI, or an RI.

As an embodiment, the first pre-compression CSI includes at least one channel matrix.

As an embodiment, the first pre-compression CSI includes information of at least one channel matrix.

As an embodiment, the first pre-compression CSI includes at least one eigenvector.

As an embodiment, the first pre-compression CSI includes information of at least one eigenvector.

As an embodiment, the first pre-compression CSI is obtained after at least one channel matrix undergoes preprocessing.

As an embodiment, the preprocessing includes a discrete Fourier transform (DFT).

As an embodiment, the preprocessing includes one or more of quantization, transformation from a spatial domain to an angular domain, transformation from a frequency domain to a time domain, transformation from a time domain to a frequency domain, or truncation.

As an embodiment, the first pre-compression CSI includes a first matrix, the first compressed CSI includes a second matrix, and a quantity of elements in the second matrix is less than a quantity of elements in the first matrix.

As an embodiment, the first pre-compression CSI is represented by Q1 bits, and the first compressed CSI is represented by Q2 bits, where both Q1 and Q2 are positive integers greater than 1, and Q1 is greater than Q2.

As an embodiment, the first function is used to generate any CSI report for the second CSI report configuration.

As an embodiment, the first function is used to generate compressed CSI included in any CSI report for the second CSI report configuration.

As an embodiment, the first CSI report configuration set includes a plurality of CSI report configurations, and the first function is used to generate any CSI report for any CSI report configuration in the first CSI report configuration set.

As an embodiment, the first CSI report configuration set includes a plurality of CSI report configurations, and the first function is used to generate compressed CSI included in any CSI report for any CSI report configuration in the first CSI report configuration set.

### Embodiment 14

Embodiment 14 illustrates a schematic diagram of a second function according to an embodiment of the present application, as shown in FIG. 14. In Embodiment 14, the first compressed CSI is used as an input of a second function to generate first CSI.

As an embodiment, the first compressed CSI is used by the second node as an input of the second function to generate the first CSI.

As an embodiment, the first compressed CSI is used by the first node as an input of the second function to generate the first CSI.

As an embodiment, the first CSI includes a PMI.

As an embodiment, the first CSI includes at least one of a CQI, a CRI, or an RI.

As an embodiment, the first CSI includes at least one channel matrix.

As an embodiment, the first CSI includes information of at least one channel matrix.

As an embodiment, the first CSI includes at least one eigenvector.

As an embodiment, the first CSI includes information of at least one eigenvector.

As an embodiment, the second function is non-linear.

As an embodiment, the second function is non-codebook-based.

As an embodiment, an input of the second function includes compressed CSI.

As an embodiment, an output of the second function includes recovered pre-compression CSI.

As an embodiment, the second function is based on artificial intelligence or machine learning.

As an embodiment, the second function is based on a neural network.

As an embodiment, the second function includes a neural network for CSI compression.

As an embodiment, the second function includes a decoder of a neural network for CSI compression.

As an embodiment, the second function includes a CNN-based decoder for CSI compression.

As an embodiment, a decoder based on CsiNet or CRNet is used to implement the second function.

As an embodiment, the second function is obtained through training.

As an embodiment, the second function includes K2 sub-functions, where K2 is a positive integer greater than 1.

As an embodiment, the K2 sub-functions include one or more of a convolution function, a pooling function, a concatenation function, or an activation function.

As an embodiment, there is a sub-function in the K2 sub-functions that includes a preprocessing layer.

As a sub-embodiment of the above embodiment, the preprocessing layer includes a fully connected layer.

As a sub-embodiment of the above embodiment, the preprocessing layer expands a size of an input of the second function.

As an embodiment, there is a sub-function in the K2 sub-functions that includes a pooling layer.

As an embodiment, there is at least one sub-function in the K2 sub-functions that includes at least one convolutional layer.

As an embodiment, there is at least one sub-function in the K2 sub-functions that includes at least one decoding layer.

As an embodiment, the one decoding layer includes at least one convolutional layer.

As an embodiment, the one decoding layer includes at least one convolutional layer and a pooling layer.

As an embodiment, there is a sub-function in the K2 sub-functions that includes a preprocessing layer, and there is at least one sub-function in the K2 sub-functions that includes at least one decoding layer.

As an embodiment, when the first CSI report configuration is used to generate the first function, the first CSI report configuration is used to generate the second function.

As an embodiment, the first CSI report configuration is not used to generate the second function.

### Embodiment 15

Embodiment 15 illustrates a schematic diagram of a relationship among first pre-compression CSI, first compressed CSI, a first function, and a second function according to an embodiment of the present application, as shown in FIG. 15. In Embodiment 15, the first pre-compression CSI is used by the first node as an input of the first function to generate the first compressed CSI, and the first compressed CSI is used by the second node as an input of the second function to generate the first CSI.

As an embodiment, the first CSI includes a recovered value of the first pre-compression CSI.

As an embodiment, the first CSI includes an estimated value of the first pre-compression CSI.

As an embodiment, the first CSI includes some or all of information of the first pre-compression CSI.

As an embodiment, the first compressed CSI is transmitted by the first node and is received by the second node through an air interface.

As an embodiment, the first compressed CSI is transmitted by the first node after being quantized and is received by the second node through an air interface.

As an embodiment, the first function is used to compress the first pre-compression CSI to reduce the air-interface overhead of the first compressed CSI, and the second function is used to decompress the first compressed CSI to recover the first pre-compression CSI as much as possible.

As an embodiment, the first node obtains a first channel matrix based on a measurement for an RS received in the second RS resource group; and the first channel matrix is used to generate the first pre-compression CSI.

As a sub-embodiment of the above embodiment, any element in the first channel matrix includes information of a channel experienced by an RS transmitted on an RS port in the second RS resource group over a frequency unit.

As a reference embodiment of the above sub-embodiment, the frequency unit is a sub-band.

As a reference embodiment of the above sub-embodiment, the frequency unit is an RB.

As a reference embodiment of the above sub-embodiment, the frequency unit consists of a plurality of continuous RBs.

As a sub-embodiment of the above embodiment, the first pre-compression CSI includes the first channel matrix.

As a sub-embodiment of the above embodiment, the first pre-compression CSI includes at least one eigenvector of the first channel matrix.

As a sub-embodiment of the above embodiment, the first pre-compression CSI is obtained after the first channel matrix undergoes preprocessing.

As a sub-embodiment of the above embodiment, the first CSI includes an estimated value of the first channel matrix.

As a sub-embodiment of the above embodiment, the first CSI includes an estimated value of at least one eigenvector of the first channel matrix.

As an embodiment, the second function is an inverse function of the first function.

As an embodiment, the first function is established at the first node, and the second function is established at the second node.

As an embodiment, the first function is established at both the first node and the second node, and the second function is established at the second node.

As an embodiment, the first function is established at the first node, and the second function is established at both the first node and the second node.

As an embodiment, the first function and the second function are established at both the first node and the second node.

### Embodiment 16

Embodiment 16 illustrates a schematic diagram in which when a first CSI report configuration is not used to generate a first function, type-I processing units are type-II processing units; and when the first CSI report configuration is used to generate the first function, the type-I processing units are type-III processing units according to an embodiment of the present application, as shown in FIG. 16.

As an embodiment, the type-II processing unit includes a CSI processing unit.

As an embodiment, the type-II processing unit is a CSI processing unit.

As an embodiment, the type-III processing unit includes a CSI processing unit.

As an embodiment, the type-III processing unit is another CSI processing unit different from a CSI processing unit.

As an embodiment, the type-III processing unit is a general-purpose processing unit.

As an embodiment, the type-II processing unit is a CSI processing unit, and the type-III processing unit is another processing unit different from the CSI processing unit.

As an embodiment, the type-II processing unit is used to process a type-I CSI report, and the type-III processing unit is used to process a type-II CSI report.

As an embodiment, when the first CSI report configuration is not used to generate the first function, the first CSI report is a type-I CSI report; and when the first CSI report configuration is used to generate the first function, the first CSI report is a type-II CSI report.

As an embodiment, a type-I CSI report does not indicate compressed CSI and is not used to generate a type-I function.

As an embodiment, a type-II CSI report is used to generate a type-I function.

As an embodiment, a type-II CSI report includes a piece of compressed CSI or is used to generate a type-I function.

As an embodiment, the first function is a type-I function.

As an embodiment, an output of a type-I function includes compressed CSI.

As an embodiment, a type-I function is non-codebook-based.

As an embodiment, a type-I function is based on artificial intelligence or machine learning.

As an embodiment, a type-I function is based on a neural network.

As an embodiment, a type-I function includes an encoder of a neural network for CSI compression.

As an embodiment, a type-I function is obtained through training.

As an embodiment, the type-II processing unit and the type-III processing unit have different computational capabilities.

As an embodiment, the type-II processing unit and the type-III processing unit have different processing capabilities.

### Embodiment 17

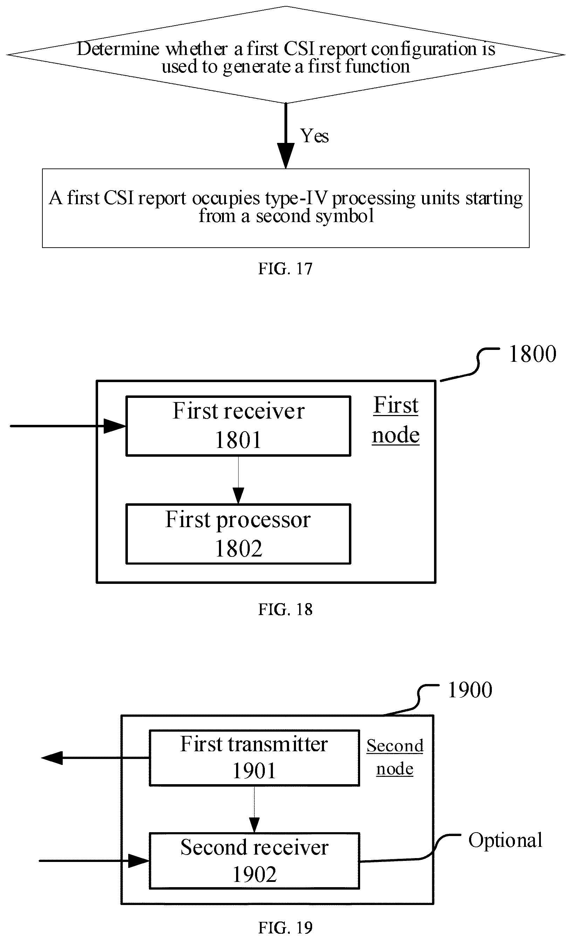

Embodiment 17 illustrates a schematic diagram in which when a first CSI report configuration is used to generate a first function, a first CSI report occupies type-IV processing units starting from a second symbol according to an embodiment of the present application, as shown in FIG. 17.

As an embodiment, the second symbol is an OFDM symbol.

As an embodiment, the second symbol is the first symbol.

As an embodiment, the second symbol and the first symbol are the same OFDM symbol.

As an embodiment, the second symbol and the first symbol are two different OFDM symbols.

As an embodiment, the second symbol precedes the first symbol in a time domain.

As an embodiment, the second symbol is later than the first symbol in a time domain.

As an embodiment, the first symbol and the second symbol correspond to the same sub-carrier interval.

As an embodiment, when the first CSI report configuration is not used to generate the first function, the first CSI report does not occupy the type-IV processing units.

As an embodiment, when the first CSI report configuration is used to generate the first function, the first CSI report does not occupy the type-IV processing units prior to the second symbol.

As an embodiment, when the first CSI report configuration is used to generate the first function, the first CSI report does not occupy both the type-I processing units and the type-IV processing units prior to the second symbol.

As a sub-embodiment of the above embodiment, the second symbol is the first symbol.

As a sub-embodiment of the above embodiment, the second symbol precedes the first symbol in a time domain.

As an embodiment, the type-IV processing unit includes a CSI processing unit.

As an embodiment, the type-IV processing unit is a CSI processing unit.

As an embodiment, the type-IV processing unit includes a general-purpose processing unit.

As an embodiment, the type-IV processing unit is another CSI processing unit different from a CSI processing unit.

As an embodiment, the type-IV processing unit is the type-II processing unit.

As an embodiment, the type-I processing unit is a CSI processing unit, and the type-IV processing unit is another processing unit different from the CSI processing unit.

As an embodiment, the type-I processing unit is used to process a type-I CSI report and a type-II CSI report; and the type-IV processing unit is used to process only the type-II CSI report in the type-I CSI report and the type-II CSI report.

As an embodiment, the type-IV processing unit is a CSI processing unit; and when the first CSI report configuration is used to generate the first function, the type-I processing unit is another processing unit different from the CSI processing unit.

As an embodiment, the type-IV processing unit is used to process a type-I CSI report and a type-II CSI report; and when the first CSI report configuration is used to generate the first function, the type-I processing unit is used to process only the type-II CSI report in the type-I CSI report and the type-II CSI report.

As an embodiment, when the first CSI report configuration is not used to generate the first function, the first CSI report is a type-I CSI report; and when the first CSI report configuration is used to generate the first function, the first CSI report is a type-II CSI report.

As an embodiment, a type-I CSI report does not indicate compressed CSI and is not used to generate a type-I function.

As an embodiment, a type-II CSI report is used to generate a type-I function.

As an embodiment, a type-II CSI report includes a piece of compressed CSI or is used to generate a type-I function.

As an embodiment, the type-I processing unit and the type-IV processing unit have different computational capabilities.

As an embodiment, the type-I processing unit and the type-IV processing unit have different processing capabilities.

As an embodiment, a quantity of the type-IV processing units occupied by the first CSI report is a negative integer.

As an embodiment, a quantity of the type-IV processing units occupied by the first CSI report is unrelated to the quantity of the type-I processing units occupied by the first CSI report.

As an embodiment, a quantity of the type-IV processing units occupied by the first CSI report and the quantity of the type-I processing units occupied by the first CSI report are determined separately.

As an embodiment, a quantity of the type-IV processing units occupied by the first CSI report is related to a quantity of RS resources included in the first RS resource group.

As an embodiment, a quantity of the type-IV processing units occupied by the first CSI report changes with a quantity of RS resources included in the first RS resource group.

As an embodiment, a quantity of RS resources included in the first RS resource group is used to determine a quantity of the type-IV processing units occupied by the first CSI report.

As an embodiment, a quantity of the type-IV processing units occupied by the first CSI report is related to a maximum value of a quantity of RS ports of RS resources in the first RS resource group.

As an embodiment, a quantity of the type-IV processing units occupied by the first CSI report changes with a maximum value of a quantity of RS ports of RS resources in the first RS resource group.

As an embodiment, a maximum value of a quantity of RS ports of RS resources in the first RS resource group is used to determine a quantity of the type-IV processing units occupied by the first CSI report.

As an embodiment, a quantity of the type-IV processing units occupied by the first CSI report is related to a bandwidth of frequency-domain resources occupied by the first RS resource group.

As an embodiment, a quantity of the type-IV processing units occupied by the first CSI report changes with a bandwidth of frequency-domain resources occupied by the first RS resource group.

As an embodiment, a bandwidth of frequency-domain resources occupied by the first RS resource group is used to determine a quantity of the type-IV processing units occupied by the first CSI report.

### Embodiment 18

Embodiment 18 illustrates a structural block diagram of a processing apparatus used in a first node device according to an embodiment of the present application, as shown in FIG. 18. In FIG. 18, a processing apparatus 1800 in a first node device includes a first receiver 1801 and a first processor 1802.

In Embodiment 18, the first receiver 1801 receives a first CSI report configuration, which is used to determine a first CSI report; and the first processor 1802 updates the first CSI report.

In Embodiment 18, the first CSI report configuration includes a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; the first CSI report does not occupy type-I processing units prior to a first symbol; and a quantity of the type-I processing units occupied by the first CSI report is related to whether the first CSI report configuration is used to generate a first function.

As an embodiment, the first CSI report configuration includes a third higher-layer parameter, which is used to determine whether the first CSI report configuration is used to generate the first function.

As an embodiment, whether the first CSI report configuration includes a fourth higher-layer parameter is used to determine whether the first CSI report configuration is used to generate the first function.

As an embodiment, when the first CSI report configuration is used to generate the first function, the quantity of the type-I processing units occupied by the first CSI report is related to a first index, the first index being associated with the first function.

As an embodiment, the first receiver 1801 receives a first CSI report configuration set; and the first processor 1802 transmits a second CSI report, the second CSI report including first compressed CSI, where the first CSI report configuration set includes a second CSI report configuration, the second CSI report configuration being used to determine the second CSI report; and first pre-compression CSI is used as an input of the first function to generate the first compressed CSI.

As an embodiment, when the first CSI report configuration is not used to generate the first function, the type-I processing units are type-II processing units; and when the first CSI report configuration is used to generate the first function, the type-I processing units are type-III processing units.

As an embodiment, when the first CSI report configuration is used to generate the first function, the first CSI report occupies type-IV processing units starting from a second symbol.

As an embodiment, the first node device is user equipment.

As an embodiment, the first node device is relay node equipment.

As an embodiment, the first receiver 1801 receives an RS in the first RS resource group.

As an embodiment, the first receiver 1801 receives an RS in the second RS resource group in Embodiment 5.

As an embodiment, when a value of the first higher-layer parameter is set to any candidate parameter value in the first candidate parameter value subset, the first node does not report any CSI report quantity for the first CSI report configuration, where the CSI report quantity includes compressed CSI, a CQI, a PMI, a CRI, an LI, an RI, an SSBRI, L1-RSRP, and an L1-SINR.

As an embodiment, when a value of the first higher-layer parameter is set to any candidate parameter value in the first candidate parameter value subset, the first node does not report any type-I CSI report quantity for the first CSI report configuration, where the type-I CSI report quantity includes compressed CSI, a CQI, a PMI, a CRI, an LI, an RI, an SSBRI, L1-RSRP, and an L1-SINR.

As an embodiment, the first symbol is an OFDM symbol; the first node obtains a channel measurement for updating the first CSI report based on the first RS resource group; the first RS resource group includes at least one RS resource; any RS resource in the first RS resource group is a CSI-RS resource or an SS/PBCH block resource; and an output of the first function includes compressed CSI, or the first function is based on artificial intelligence or machine learning.

As an embodiment, when the first CSI report configuration is used to generate the first function, the action of updating the first CSI report is used for at least one of the following: training the first function or obtaining a channel measurement for obtaining data required to train the first function.

As an embodiment, the quantity of the type-I processing units occupied by the first CSI report is related to both the second higher-layer parameter and whether the first CSI report configuration is used to generate the first function.

As an embodiment, the first receiver 1801 includes at least one of an antenna 452, a receiver 454, a receiver processor 456, a multi-antenna receiver processor 458, a controller/processor 459, a memory 460, or a data source 467 in Embodiment 4.

As an embodiment, the first processor 1802 includes at least one of an antenna 452, a receiver/transmitter 454, a receiver processor 456, a transmitter processor 468, a multi-antenna receiver processor 458, a multi-antenna transmitter processor 457, a controller/processor 459, a memory 460, or a data source 467 in Embodiment 4.

### Embodiment 19

Embodiment 19 illustrates a structural block diagram of a processing apparatus used in a second node device according to an embodiment of the present application, as shown in FIG. 19. In FIG. 19, a processing apparatus 1900 in a second node device includes a first transmitter 1901 and a second receiver 1902, where the second receiver 1902 is optional.

In Embodiment 19, the first transmitter 1901 transmits a first CSI report configuration.

In Embodiment 19, the first CSI report configuration is used to determine the first CSI report; the first CSI report configuration includes a first higher-layer parameter and a second higher-layer parameter; the first higher-layer parameter is set to a first parameter value, which belongs to a first candidate parameter value subset; the second higher-layer parameter is used to determine a first RS resource group, which is used for channel measurement; a target recipient of the first CSI report configuration updates the first CSI report; the first CSI report does not occupy type-I processing units prior to a first symbol; and a quantity of the type-I processing units occupied by the first CSI report is related to whether the first CSI report configuration is used to generate a first function.

As an embodiment, the first CSI report configuration includes a third higher-layer parameter, which is used to determine whether the first CSI report configuration is used to generate the first function.

As an embodiment, whether the first CSI report configuration includes a fourth higher-layer parameter is used to determine whether the first CSI report configuration is used to generate the first function.

As an embodiment, when the first CSI report configuration is used to generate the first function, the quantity of the type-I processing units occupied by the first CSI report is related to a first index, the first index being associated with the first function.

As an embodiment, a processing apparatus 1900 in the second node device includes a second receiver 1902, where the first transmitter 1901 transmits a first CSI report configuration set; the second receiver 1902 receives a second CSI report, the second CSI report including first compressed CSI; the first CSI report configuration set includes a second CSI report configuration, the second CSI report configuration being used to determine the second CSI report; and first pre-compression CSI is used as an input of the first function to generate the first compressed CSI.

As an embodiment, when the first CSI report configuration is not used to generate the first function, the type-I processing units are type-II processing units; and when the first CSI report configuration is used to generate the first function, the type-I processing units are type-III processing units.

As an embodiment, when the first CSI report configuration is used to generate the first function, the first CSI report occupies type-IV processing units starting from a second symbol.

As an embodiment, a device in the second node is base station equipment.

As an embodiment, a device in the second node is user equipment.

As an embodiment, a device in the second node is relay node equipment.

As an embodiment, the first transmitter 1901 transmits an RS in the first RS resource group.

As an embodiment, the first transmitter 1901 transmits an RS in the second RS resource group in Embodiment 5.

As an embodiment, when a value of the first higher-layer parameter is set to any candidate parameter value in the first candidate parameter value subset, a target recipient of the first CSI report configuration does not report any CSI report quantity for the first CSI report configuration, where the CSI report quantity includes compressed CSI, a CQI, a PMI, a CRI, an LI, an RI, an SSBRI, L1-RSRP, and an L1-SINR.

As an embodiment, when a value of the first higher-layer parameter is set to any candidate parameter value in the first candidate parameter value subset, a target recipient of the first CSI report configuration does not report any type-I CSI report quantity for the first CSI report configuration, where the type-I CSI report quantity includes compressed CSI, a CQI, a PMI, a CRI, an LI, an RI, an SSBRI, L1-RSRP, and an L1-SINR.

As an embodiment, the first symbol is an OFDM symbol; a target recipient of the first CSI report configuration obtains a channel measurement for updating the first CSI report based on the first RS resource group; the first RS resource group includes at least one RS resource; any RS resource in the first RS resource group is a CSI-RS resource or an SS/PBCH block resource; and an output of the first function includes compressed CSI, or the first function is based on artificial intelligence or machine learning.

As an embodiment, when the first CSI report configuration is used to generate the first function, the action of updating the first CSI report is used for at least one of the following: training the first function or obtaining a channel measurement for obtaining data required to train the first function.

As an embodiment, the quantity of the type-I processing units occupied by the first CSI report is related to both the second higher-layer parameter and whether the first CSI report configuration is used to generate the first function.

As an embodiment, the first transmitter 1901 includes at least one of an antenna 420, a transmitter 418, a transmitter processor 416, a multi-antenna transmitter processor 471, a controller/processor 475, or a memory 476 in Embodiment 4.

As an embodiment, the second receiver 1902 includes at least one of an antenna 420, a receiver 418, a receiver processor 470, a multi-antenna receiver processor 472, a controller/processor 475, or a memory 476 in Embodiment 4.

It can be understood by those of ordinary skill in the art that some or all of the steps in the above method may be completed by a program instructing relevant hardware. The program can be stored in a computer-readable storage medium, such as a read-only memory, a hard disk, or an optical disc. Optionally, some or all of the steps in the above embodiment may also be implemented by using one or more integrated circuits. Correspondingly, each module unit in the above embodiment may be implemented in the form of hardware or a software functional module. The present application is not limited to any specific form of combination between software and hardware. The terminals and the UE in the present application include, but are not limited to, drones, communication modules on the drones, remote-controlled aircrafts, aircrafts, small airplanes, mobile phones, tablet computers, laptops, vehicle-mounted communication devices, transportation means, vehicles, RSUs, wireless sensors, Internet cards, Internet of Things terminals, RFID terminals, NB-IOT terminals, machine type communication (MTC) terminals, enhanced MTC (eMTC) terminals, data cards, low-cost mobile phones, low-cost tablet computers, and other wireless communication devices. The base stations or the system devices in the present application include, but are not limited to, macrocell base stations, microcell base stations, small cell base stations, home base stations, relay base stations, eNB, gNB, transmitter receiver points (TRPs), GNSSs, relay satellites, satellite base stations, airborne base stations, road side units (RSUs), drones, test equipment, and wireless communication devices such as transceiver devices simulating some functions of base stations or signaling testers.

Those skilled in the art should understand that the present disclosure may be implemented in other specified forms without departing from its core or basic characteristics. Therefore, the currently disclosed embodiments should be regarded as descriptive rather than restrictive in any case. The scope of the invention is determined by the appended claims rather than the foregoing description, and all modifications within the equivalent meaning and scope thereof are considered to be included therein.

## Claims

1. A first node device used for wireless communication, comprising:
a first receiver, configured to receive a first channel state information (CSI) report configuration, the first CSI report configuration being used to determine a first CSI report; and
a first processor, configured to update the first CSI report,
wherein the first CSI report configuration comprises a first higher-layer parameter and a second higher-layer parameter; the first higher-layer parameter is set to a first parameter value, the first parameter value belonging to a first candidate parameter value subset; the second higher-layer parameter is used to determine a first reference signal (RS) resource group, the first RS resource group being used for channel measurement; the first CSI report does not occupy type-I processing units prior to a first symbol; and a quantity of the type-I processing units occupied by the first CSI report is related to whether the first CSI report configuration is used to generate a first function.

2. The first node device according to claim 1, wherein the first CSI report configuration comprises a third higher-layer parameter, the third higher-layer parameter being used to determine whether the first CSI report configuration is used to generate the first function.

3. The first node device according to claim 1 or 2, wherein whether the first CSI report configuration comprises a fourth higher-layer parameter is used to determine whether the first CSI report configuration is used to generate the first function.

4. The first node device according to any one of claims 1 to 3, wherein when the first CSI report configuration is used to generate the first function, the quantity of the type-I processing units occupied by the first CSI report is related to a first index, the first index being associated with the first function.

5. The first node device according to any one of claims 1 to 4, wherein the first receiver receives a first CSI report configuration set; and the first processor transmits a second CSI report, the second CSI report comprising first compressed CSI, wherein the first CSI report configuration set comprises a second CSI report configuration, the second CSI report configuration being used to determine the second CSI report; and first pre-compression CSI is used as an input of the first function to generate the first compressed CSI.

6. The first node device according to any one of claims 1 to 5, wherein when the first CSI report configuration is not used to generate the first function, the type-I processing units are type-II processing units; and when the first CSI report configuration is used to generate the first function, the type-I processing units are type-III processing units.

7. The first node device according to any one of claims 1 to 6, wherein when the first CSI report configuration is used to generate the first function, the first CSI report occupies type-IV processing units starting from a second symbol.

8. A second node device used for wireless communication, comprising:
a first transmitter, configured to transmit a first CSI report configuration, the first CSI report configuration being used to determine a first CSI report,
wherein the first CSI report configuration comprises a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; a target recipient of the first CSI report configuration updates the first CSI report; the first CSI report does not occupy type-I processing units prior to a first symbol; and a quantity of the type-I processing units occupied by the first CSI report is related to whether the first CSI report configuration is used to generate a first function.

9. The second node device according to claim 8, wherein the first CSI report configuration comprises a third higher-layer parameter, the third higher-layer parameter being used to determine whether the first CSI report configuration is used to generate the first function.

10. The second node device according to claim 8 or 9, wherein whether the first CSI report configuration comprises a fourth higher-layer parameter is used to determine whether the first CSI report configuration is used to generate the first function.

11. The second node device according to any one of claims 8 to 10, wherein when the first CSI report configuration is used to generate the first function, the quantity of the type-I processing units occupied by the first CSI report is related to a first index, the first index being associated with the first function.

12. The second node device according to any one of claims 8 to 11, comprising:
a second receiver,
wherein the first transmitter transmits a first CSI report configuration set; the second receiver receives a second CSI report, the second CSI report comprising first compressed CSI; the first CSI report configuration set comprises a second CSI report configuration, the second CSI report configuration being used to determine the second CSI report; and first pre-compression CSI is used as an input of the first function to generate the first compressed CSI.

13. The second node device according to any one of claims 8 to 12, wherein when the first CSI report configuration is not used to generate the first function, the type-I processing units are type-II processing units; and when the first CSI report configuration is used to generate the first function, the type-I processing units are type-III processing units.

14. The second node device according to any one of claims 8 to 13, wherein when the first CSI report configuration is used to generate the first function, the first CSI report occupies type-IV processing units starting from a second symbol.

15. A method used in a first node for wireless communication, comprising:
receiving a first CSI report configuration, the first CSI report configuration being used to determine a first CSI report; and
updating the first CSI report,
wherein the first CSI report configuration comprises a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; the first CSI report does not occupy type-I processing units prior to a first symbol; and a quantity of the type-I processing units occupied by the first CSI report is related to whether the first CSI report configuration is used to generate a first function.

16. The method according to claim 15, wherein the first CSI report configuration comprises a third higher-layer parameter, the third higher-layer parameter being used to determine whether the first CSI report configuration is used to generate the first function.

17. The method according to claim 15 or 16, wherein whether the first CSI report configuration comprises a fourth higher-layer parameter is used to determine whether the first CSI report configuration is used to generate the first function.

18. The method according to any one of claims 15 to 17, wherein when the first CSI report configuration is used to generate the first function, the quantity of the type-I processing units occupied by the first CSI report is related to a first index, the first index being associated with the first function.

19. The method according to any one of claims 15 to 18, comprising:
receiving a first CSI report configuration set; and
transmitting a second CSI report, the second CSI report comprising first compressed CSI,
wherein the first CSI report configuration set comprises a second CSI report configuration, the second CSI report configuration being used to determine the second CSI report; and first pre-compression CSI is used as an input of the first function to generate the first compressed CSI.

20. The method according to any one of claims 15 to 19, wherein when the first CSI report configuration is not used to generate the first function, the type-I processing units are type-II processing units; and when the first CSI report configuration is used to generate the first function, the type-I processing units are type-III processing units.

21. The method according to any one of claims 15 to 20, wherein when the first CSI report configuration is used to generate the first function, the first CSI report occupies type-IV processing units starting from a second symbol.

22. A method used in a second node for wireless communication, comprising:
transmitting a first CSI report configuration, the first CSI report configuration being used to determine a first CSI report,
wherein the first CSI report configuration comprises a first higher-layer parameter and a second higher-layer parameter; the first higher-layer parameter is set to a first parameter value, the first parameter value belonging to a first candidate parameter value subset; the second higher-layer parameter is used to determine a first RS resource group, the first RS resource group being used for channel measurement; a target recipient of the first CSI report configuration updates the first CSI report; the first CSI report does not occupy type-I processing units prior to a first symbol; and a quantity of the type-I processing units occupied by the first CSI report is related to whether the first CSI report configuration is used to generate a first function.

23. The method according to claim 22, wherein the first CSI report configuration comprises a third higher-layer parameter, the third higher-layer parameter being used to determine whether the first CSI report configuration is used to generate the first function.

24. The method according to claim 22 or 23, wherein whether the first CSI report configuration comprises a fourth higher-layer parameter is used to determine whether the first CSI report configuration is used to generate the first function.

25. The method according to any one of claims 22 to 24, wherein when the first CSI report configuration is used to generate the first function, the quantity of the type-I processing units occupied by the first CSI report is related to a first index, the first index being associated with the first function.

26. The method according to any one of claims 22 to 25, comprising:
transmitting a first CSI report configuration set; and
receiving a second CSI report, the second CSI report comprising first compressed CSI,
wherein the first CSI report configuration set comprises a second CSI report configuration, the second CSI report configuration being used to determine the second CSI report; and first pre-compression CSI is used as an input of the first function to generate the first compressed CSI.

27. The method according to any one of claims 22 to 26, wherein when the first CSI report configuration is not used to generate the first function, the type-I processing units are type-II processing units; and when the first CSI report configuration is used to generate the first function, the type-I processing units are type-III processing units.

28. The method according to any one of claims 22 to 27, wherein when the first CSI report configuration is used to generate the first function, the first CSI report occupies type-IV processing units starting from a second symbol.
